(19) Europäisches Patentamt
European Patent Office
Office européen des brevets

(11) **EP 2 164 302 A1**

(12) **EUROPÄISCHE PATENTANMELDUNG**

(43) Veröffentlichungstag:
**17.03.2010 Patentblatt 2010/11**

(51) Int Cl.:
***H05B 33/22*** *(2006.01)*

(21) Anmeldenummer: 08164280.3

(22) Anmeldetag: **12.09.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **ILFORD IMAGING SWITZERLAND GMBH**
**CH-1723 Marly (CH)**

(72) Erfinder:
• **Pauchard, Marc**
**1700 Fribourg (CH)**

• **Perrenoud, Juliette**
**1007 Lausanne (CH)**
• **Fürholz, Urs**
**1723 Marly (CH)**
• **Ferrini, Rolando**
**1006 Lausanne (CH)**
• **Nicolet, Olivier**
**1304 Cossonay (CH)**
• **Zuppiroli, Libero**
**1427 Bonvillars (CH)**

(54) **Optisches Element und Verfahren zu seiner Herstellung**

(57)    Die vorliegende Erfindung bezweckt in einer Lichtkonversionsfolie die Ausbeute an verwendbaren Licht im Vergleich zum eingestrahlten Licht zu vergrössern.

Hierzu wird vorgeschlagen die folgenden Effekte einzeln oder in Kombination in den diversen Schichten der Konversionsfolie zu verwirklichen, nämlich die Isolierung der Konversionsschicht (3) von der Trägerschicht (1) mittels einer, vorteilhafterweise mikro- und mesoporösen Zwischenschicht (2), und die Anordnung von Streuzentren (4) entweder in dieser Zwischenschicht, oder in der Konversionsschicht, oder in beiden.

EP 2 164 302 A1

**Beschreibung**

**Gebiet der Erfindung**

Die vorliegende Erfindung bezieht sich auf ein optisches Element entsprechend dem Oberbegriff des Patentanspruchs 1, sowie auf ein Verfahren zu seiner Herstellung nach Anspruch 15.

Insbesondere bezieht sich die Erfindung auf flexible Materialien für optische Anwendungen, welche in einem Schichtpaket mindestens eine Lichtkonversionsschicht aufweisen, welche die spektrale Zusammensetzung von einfallendem Licht durch Streuung, Absorption und Photolumineszenz verändern kann.

**Stand der Technik**

Lichtkonversionsschichten werden überall dort eingesetzt, wo die spektrale Zusammensetzung von Lichtquellen verändert werden soll. Im Gegensatz zu Farbfiltern, welche gewisse spektrale Komponenten des Lichts absorbieren oder reflektieren, wandeln die Lichtkonversionsschichten einen Teil der absorbierten Lichtenergie um und strahlen sie bei einer höheren Wellenlänge wieder ab. Es ist daher möglich, Licht einer tieferen Wellenlänge in Licht einer höheren Wellenlänge umzuwandeln. Die Konversionsschichten enthalten dazu einen oder mehrere Konversionsfarbstoffe, welche zumindest einen Teil des Lichtspektrums absorbieren und mittels Fluoreszenz oder Phosphoreszenz umwandeln können.

Diese Art der Lichtumwandlung wird unter anderem dazu verwendet, um Leuchtmittel, welche für das menschliche Auge sichtbar sind (Lichtwellenlängen zwischen 400 nm und 700 nm), zu erzeugen oder zu verändern. Solche Leuchtmittel werden überall dort eingesetzt, wo Licht benötigt wird, welches für das menschliche Auge sichtbar ist, so zum Beispiel bei der Beleuchtung von Räumen, als Beleuchtung von Werbeplakaten, Sicherheitsschildern oder als Hintergrundsbeleuchtung in LCD Bildschirmen und Mobiltelefonen.

Ein bekanntes Beispiel eines solchen Leuchtmittels ist die Fluoreszenzröhre, welche für das menschliche Auge unsichtbare ultraviolette Strahlung erzeugt, die dann durch eine Lichtkonversionsschicht in Licht im Wellenlängenbereich zwischen 400 nm und 700 nm umgewandelt wird. Die Lichtkonversionsschicht wird dabei direkt auf die Innenwände der Fluoreszenzröhre aufgebracht und es werden ausschliesslich anorganische Phosphore als Konversionsfarbstoffe verwendet. Eine weitere Eigenschaft dieser Schichten ist, dass sie für UV-Licht undurchlässig sein müssen, sichtbares Licht stark streuen und daher nicht transparent sondern opak sind.

Ein anderes Beispiel ist die weisse Leuchtdiode, bei welcher beispielsweise blaues Licht einer Leuchtdiode durch einen Konversionsfarbstoff teilweise in gelb-grünes Licht umgewandelt wird, wie beispielsweise in der PCT Anmeldung WO 2006/127030 beschrieben wird.

Lichtkonversionsschichten werden aber auch in Sicherheitsmarkierungen verwendet, wo sie beispielsweise für das menschliche Auge unsichtbare ultraviolette Strahlung in sichtbares Licht umwandeln. Solch ein Sichtheitsmerkmal wird erst unter einer UV-Lampe sichtbar.

Lichtkonversionsschichten finden auch Anwendungen in der Nahrungsmittelproduktion, wo beispielsweise die Konversionsschichten das Sonnenlicht oder künstliches Licht so verändern, dass es für das Pflanzenwachstum besonders förderlich ist.

Lichtkonversionsschichten finden auch Anwendungen um das Lichtspektrum von in der Dunkelheit selbstleuchtenden phosphoreszierenden Flächen, wie beispielsweise phosphoreszierende Fluchtwegsignalisationen, zu verändern.

Alle Konversionsschichten haben dasselbe Ziel, nähmlich das Licht möglichst effizient umzuwandeln und das umgewandelte Licht möglichst effizient dorthin abzustrahlen, wo es erwünscht ist. Dazu müssen die Anregung der Konversionsfarbstoffe durch die Lichtquelle und die Lichtkonversion möglichst effizient sein. Die angeregten Konversionsfarbstoffe spielen dann in der Konversionsschicht die Rolle einer internen Lichtquelle. Das so umgewandelte Licht muss dann aus der Schicht extrahiert werden. Das Verhältnis von abgestrahlter Lichtmenge und absorbierter Lichtmenge wird als externe Fluorezenzausbeute bezeichnet. Um die Funktion der Konversionsschichten zu optimieren, ist es von Vorteil, wenn die einzelnen Schritte (Anregung, Umwandlung, Extraktion) möglichst unabhängig voneinander optimiert werden können.

Als weitverbreitete Konversionsschichten werden beispielsweise anorganische Phosphore mit Partikelgrössen im Mikrometerbereich verwendet, welche in ein transparentes Polymer eingeschlossen werden, wie beispielsweise im japanischen Patentdokument 11199781 oder in der amerikanischen Patentanmeldung 2007/0031685 beschrieben wird.

Durch den Brechungsindex-Unterschied zwischen den Partikeln und dem Polymer und durch die Partikelgrösse, die in diesen Dokumenten beschriben wird, werden jedoch die so hergestellten Konversionsschichten opak und streuen das sichtbare Licht erheblich, was die getrennte Kontrolle der Absorption und der Lichtabstrahlung durch die Konversionsfarbstoffe erheblich erschwert oder gar verunmöglicht. Obwohl die verwendeten Phosphore oft sehr hohe Quantenausbeuten aufweisen, ist die externe Effizienz der Lichtumwandlung durch die Konversionsschichten erheblich schlechter, da ein grosser Anteil des Anregungslichts von den Schichten reflektiert wird, und ebenfalls ein grosser Anteil des konvertierten Lichts die Schicht nicht verlassen kann oder in eine ungewünschte Richtung abgestrahlt wird.

Ein weiteres Problem tritt auf, sobald mehr als ein Konversionsfarbstoff verwendet wird. Das Ausbreitungsverhalten des Lichts in der Konversionsschicht hängt von der jeweiligen Wellenlänge ab. Daher sollten idealerweise die optischen Eigenschaften der Konversionsschichten auf den jeweiligen Konversionsfarbstoff abgestimmt werden. Es ist auch notwendig die Absorption des Anregunglichts durch die unterschiedlichen Konversionsfarbstoffe und den gegenseitigen Filtereffekt auf die emittierte Strahlung genau zu kontrollieren.

Um dies zu erreichen, wurden Mehrschichtsysteme entwickelt, welche die unterschiedlichen Konversionsfarbstoffe enthalten und in denen die optischen Eigenschaften des so entstandenen Konversionsfilms gezielt kontrolliert werden können.

Diese zum Beispiel in der eurpäischen Patentanmeldung 1 480 278 oder in der PCT Anmeldung WO2006/114077 beschriebenen Mehrschichtsysteme, bieten infolge der starken Streuung nur eine sehr limitierte Kontrolle über die optischen Eigenschaften. Im Wesentlichen wird nur die Schichtabfolge der Konversionschichten mit den zwei Konversionsfarbstoffen dazu benutzt, um die Konversionseffizienz zu erhöhen. Auf das Streuverhalten und die Lichtauskopplung kann nur sehr begrenzt Einfluss genommen werden.

Bei Verwendung organischer Farbstoffe anstelle der oben genannten anorganischen Partikeln können transparente Konversionsschichten hergestellt werden, welche nur eine geringe Streuung des Lichts aufweisen. In der europäischen Patentanmeldung 1 422 282 ist eine solche Schicht beschrieben.

In der PCT Anmeldung WO 2005/100016 wird neben der Verwendung von organischen Fluoreszenzfarbstoffen auch die Verwendung von anorganischen Phosphoren kombiniert mit hochbrechenden Polymeren, wie beispielsweise Polyimid, zur Herstellung von weitgehend transparenten Schichten beschrieben. Die notwendige Transparenz wird dabei durch die Angleichung des Brechungsindex zwischen Polymer und Konversionsfarbstoff erreicht. Obwohl auf diese Art weitgehend transparente Schichten hergestellt werden können, ist die Verteilung der Konversionsfarbstoffe in den Schichten durch die Partikelgrösse definiert. Die Schicht besteht daher aus mikrometergrossen Zonen mit einem Konversionsfarbstoff und ebensogrossen Zonen eines inaktiven transparenten Polymers, was zu einem sehr inhomogenen Verhalten der Absorption und Emission solcher Schichten führt.

Die PCT Anmeldung WO 2005/051846 beschreibt die Herstellung von anorganischen Phosphorpartikeln in der Grösse zwischen 20 nm bis 800 nm. Solche Partikel würden sich hervorragend für die Herstellung von transparenten Konversionsschichten eignen, da die Partikel klein sind im Vergleich zur Wellenlänge des verwendeten Lichts und die Streuung daher erheblich vermindert würden.

Sobald jedoch mit transparenten Konversionsschichten gearbeitet wird tritt das Problem auf, dass das konvertierte Licht im Mehrschichtsystem durch Wellenleitung gefangen wird und hauptsächlich zur Seite abgestrahlt wird, was in den oben beschriebenen Anwendungen unerwünscht ist.

In der europäischen Patentanmeldung 1 492 389 wird beschrieben, wie dieser Effekt der Seitenabstrahlung durch Wellenleitung durch die Verwendung einer tiefbrechenden mikro- und mesoporösen Schicht teilweise unterdrückt werden kann.

In der PCT Anmeldung WO 2005/100016 wird auch die Verwendung von Mehrschichtsystemen beschrieben, um basierend auf den transparenten Konversionsfilmen die Lichtauskopplung mit zusätzlichen optischen Elementen gezielt zu steuern. Die dabei beschriebenen Materialien und Herstellungstechniken sind jedoch nicht für eine kostengünstige und grossflächige Produktion solcher Konversionsfilme geeignet.

### Aufgabe der Erfindung

Es ist Aufgabe der Erfindung ein optisches Element bereitzustellen, welches eine erhöhte Ausbeute an in erwünschter Richtung abgestrahlten Licht bezogen auf die Menge des einfallenden Lichts aufweist.

### Kurzfassung der Erfindung

Diese Aufgabe wird erfüllt durch ein wie oben beschriebenes optisches Element, welches ferner die im kennzeichnenden Teil des Anspruchs 1 beschriebenen Merkmale aufweist.

Insbesondere wird diese Aufgabe erfüllt durch ein optisches Element mit einer transparenten Trägerschicht, und zumindest einer transparenten, optischen Konversionsschicht, welche Substanzen enthält, die Licht einer Wellenlänge absorbieren und Licht einer anderen Wellenlänge emittieren können, welches optische Element dadurch gekennzeichnet ist, dass es mindestens eine, zwischen der Trägerschicht und der optischen Konversionsschicht angeordnete Zwischenschicht aufweist, und dass Streuzentren entweder in der Zwischenschicht oder in der optischen Konversionsschicht enthalten sind.

Entsprechend einer Ausführungsart der Erfindung weist das optische Element eine Zwischenschicht auf, die mikro- und mesoporös ist.

Vorteilhafterweise sind die Trägerschicht, die Zwischenschicht und die optische Konversionsschicht flexibel, so dass das optische Element die Form einer flexiblen Folie annimmt.

In einer Ausführungsart der Erfindung weist das optische Element eine Trägerschicht, eine erste Zwischenschicht, darauf eine erste Konversionsschicht , darauf eine zweite Zwischenschicht und darauf einen zweite Konversionsschicht auf.

In einer anderen Ausführungsart weist das optische Element auf dieser zweiten Konversionsschicht eine dritte Zwischenschicht und darauf eine dritte Konversionsschicht auf.

In einer weiteren Ausführungsart weist das optisches Element auf der ersten Zwischenschicht zwei aufeinanderliegende Konversionsschichten auf.

Das optischs Element kann auch eine erste und zweite Zwischenschicht aufweisen, welche voneinander durch zwei aufeinanderliegenden Konversionsschichten getrennt sind.

Ferner kann das optisches Element auf der zweiten Konversionschicht eine dritte Konversionsschicht ohne dazwischenliegende Zwischenschicht aufweisen.

Vorteilhafterweise können in einem optischen Element der beschriebenen Art, in dem die Streuzentren in der (n) optischen Konversionsschicht(en) angeordnet sind, diese Streuzentren aus Partikeln aus zumindest einem Kanditaten aus der Gruppe PbS, $TiO_2$, $SiO_2$, $Al_2O_3$, AlOOH, $ZrO_2$, ZnO, $SnO_2$, ein Mischoxyd aus Indium-Zinn Oxyd, Mikrohohlkugeln oder Aerogel Partikel, jeweils mit einer mittleren Partikelgrösse zwischen 200 nm und 10,000 nm bestehen.

Gleicherweise können in einem optischen Element der beschriebenen Art, in dem die Streuzentren in der(n) Zwischenschicht(en) angeordnet sind, diese Streuzentren aus Partikeln des gleichen Materials bestehen wie die Zwischenschicht aber zu einer unterschiedlichen Porengrössenverteilung führen" oder aus Partikeln aus zumindest einem Kanditaten aus der Gruppe PbS, $TiO_2$, $SiO_2$, $Al_2O_3$, AlOOH, $ZrO_2$, ZnO, $SnO_2$, ein Mischoxyd aus Indium-Zinn Oxyd, Mikrohohlkugeln oder Aerogel Partikel, jeweils mit einer mittleren Partikelgrösse zwischen 200 nm und 10,000 nm bestehen.

Das optische Element kann weitere Schichten, wie eine auf der Trägerschicht aufgebrachte Antireflexschicht, eine Kleberschicht, eine Kleberabdeckschicht oder eine Ablöseschicht umfassen.

Das optische Element kann in der(n) Zwischenschicht(en) und/oder der/den Konversionsschicht(en) Konversionsfarbstoffe enthalten.

Das optisches Element kann auf der obersten Konversionsschicht mit optischen Elementen wie Fresnellinsen, Microlinsen, Polymerkugeln oder einer anderen Schicht versehen sein, welche zusätzlich die Lichtextraktion verbessern und die abgestrahlte Lichtverteilung beeinflussen.

Das optisches Element kann in einer oder mehreren Schichten weitere Zusätze with lumineszierende oder lichtabsorbierende Verbindungen aufweisen.

Das optische Element kann mittels eines Verfahrens hergestellt werde, das folgende Verfahrensschritte umfasst:

- Bereitstellen einer flexiblen transparenten Trägerschicht, Aufbringen auf die Trägerschicht einer wässrigen, kolloidalen Dispersion des Zwischenschichtmaterials, welche alle nötigen Komponenten enthält, bei einer Temperatur zwischen 0 und 100°C, vorzugsweise zwischen 15 und 60°C, durch Begiessen ;
- Aufbringen einer im allgemeinen wässrigen Giesslösung, welche alle nötigen Komponenten der Konversionsschicht enthält, bei einer Temperatur zwischen 0 und 100°C, vorzugsweise zwischen 15 und 60°C, durch Begiessen ;
- Trocknen der so begossenen Trägerschicht nach jedem Begiessen zur Erzeugung einer Schicht, oder nach Ausführung mehrere oder aller Schichten, mit Luft, IR-Strahlen, Mikrowellen durch thermischen Kontakt oder einer Mischung

## Kurze Beschreibung der Zeichnungen

Die Figur 1 zeigt eine schematische Darstellung einer Konversionsfolie umd alle Möglichkeiten, wie die Folie das Anregungslicht beeinflussen kann.

Die Figur 2 zeigt eine schematische Darstellung einer Konversionsfolie und alle Möglichkeiten wie das konvertierte Licht von der Folie abgestrahlt werden kann.

Die Figur 3 zeigt die Messanordnung zur Bestimmung der Absorption, der Transmission, der Reflexion und der Wellenleitung.

Die Figur 4 zeigt die Messanordnung zur Bestimmung der abgestrahlten Fluoreszenzemission.

Die Figur 5 zeigt die kleinste Einheit der erfindungsgemässen Konversionsfolie

Die Figur 6 zeigt verschiedene Varianten von Konversionsfolien mit mehreren Konversionsschichten

Die Figur 7 zeigt gemessene Transmissions- und Reflexionswerte zweier Konversionsfolien.

Die Figur 8 zeigt den Einfluss der Konzentration von Ti02-Streuzentren in der Konversionsschicht einer Referenz-Konversionsfolie ohne Konversionsfarbstoff auf das Anregungslicht der Wellenlänge 450 nm.

Die Figur 9 zeigt den Einfluss der Konzentration von SiO2-Streuzentren in der Konversionsschicht einer Referenz-Konversionsfolie ohne Konversionsfarbstoff auf das Anregungslicht der Wellenlänge 450 nm.

Die Figur 10 zeigt den Einfluss der Konzentration von TiO2-Streuzentren in einer Konversionsschicht mit Konversionsfarbstoff auf das Anregungslicht der Wellenlänge 450 nm.

Die Figur 11 zeigt den Einfluss der Konzentration von Si02-Streuzentren in einer Konversionsschicht mit Konversionsfarbstoff auf das Anregungslicht der Wellenlänge 450 nm.

Die Figur 12 zeigt den Einfluss der Konzentration von Ti02- und SiO2-Streuzentren in einer Konversionsschicht mit Konversionsfarbstoff auf die nach vorne abgestrahlte Fluoreszenz.

Die Figur 13 zeigt den Einfluss der Konzentration von Ti02- und SiO2-Streuzentren in einer Konversionsschicht mit Konversionsfarbstoff auf die Fluoreszenzeffizienz.

Die Figur 14 zeigt die nach vorne abgestrahlte Fluoreszenz von zwei Proben unterschiedlicher Oberflächenrauhigkeit der Konversionschicht.

Die Figur 15 zeigt das mittels AFM gemessene Rauhigkeitsprofil der Proben von Figur 14.

Die Figur 16 zeigt den Einfluss der Schichtdicke einer mikro- und mesoporösen Zwischenschicht auf die nach vorne abgestrahlte Fluoreszenzintensität.

Die Figur 17 zeigt den Einfluss von eingebauten Streuzentren in einer mikro- und mesoporösen Zwischenschicht mehrerer Beispiele auf die Absorption, die Fluoreszenz des Konversionsfarbstoffs und die Fluoreszenzextraktionseffizienz.

Die Figur 18 zeigt die gemessenen Fluoreszenzspektren der Beispiele aus Figur 17.

Die Figur 19 zeigt den Einfluss der Konzentration von TiO2-Streuzentren in einer Konversionsschicht auf die nach vorne abgestrahlte Fluoreszenzintensität bei Anwesenheit oder Abwesenheit einer mikro- und mesoporösen Zwischenschicht.

## Detaillierte Beschreibung der Erfindung

Im folgenden wird die Erfindung an Hand der Figuren und Beispielen im Detail näher erläutert.

In diesem Dokument werden die Begriffe der Porosität nach den IUPAC-Definitionen verwendet :

Klassifizierung poröser Materialien nach deren Porengröße: mikroporös: Poren < 2 nm ; mesoporös: Porengröße zwischen 2 und 50 nm ; makroporös: Poren > 50 nm. Falls die Porosität nicht näher spezifiziert wird, ist entweder die Porengrösse nicht bekannt oder die Porosität kann im ganzen Bereich liegen: mikro, meso und makro. Falls eine Porosität spezifiziert wird, ist dadurch nicht ausgeschlossen, dass im Material nicht auch geringe Anteile der nichtspezifizierten Porengrössen vorliegen. Als "nichtporös" wird ein Material definiert, in welchem das Verhältnis des Porenvolumens zum Gesamtvolumen weniger als 4 % beträgt.

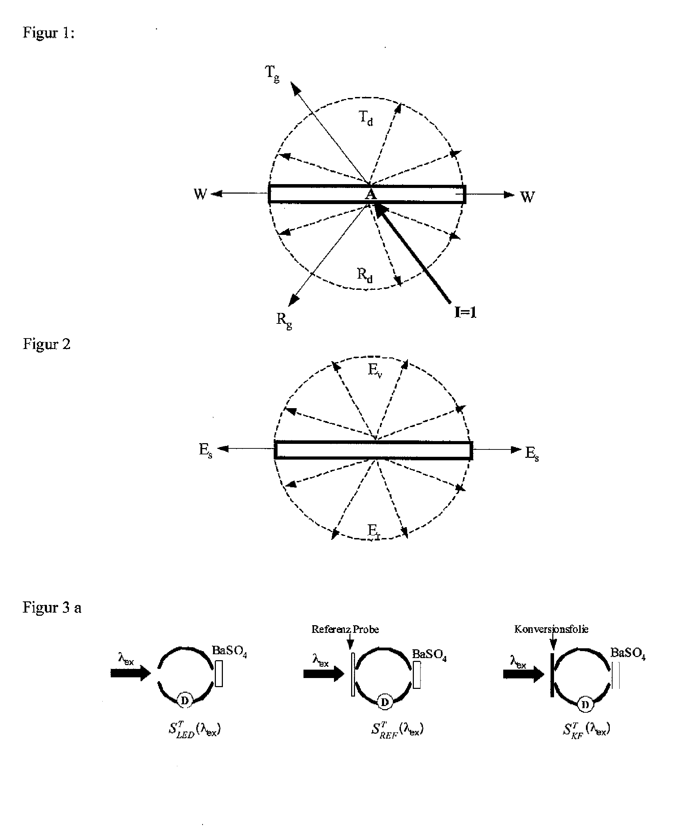

Die Figur 1 ist eine schematische Darstellung einer Konversionsfolie, auf welche monochromatisches Anregungslicht mit einer Intensität I=1 trifft und alle Möglichkeiten, wie dieses Licht durch die Konversionsfolie beeinflusst werden kann. Es gilt die Grundregel, dass die Summe des einfallenden Lichts gleich sein muss der Summe des extrahierten und absorbierten Lichts, wobei das einfallende Licht mit 1 bezeichnet ist, also $1= R_g(\lambda)+R_d(\lambda)+T_g(\lambda)+T_a(\lambda)+A(\lambda)+W(\lambda)$; mit $R_g(\lambda)$=gerichtete Reflexion, $R_d(\lambda)$= diffuse Reflexion, $T_g(\lambda)$= gerichtete Transmission, $T_d(\lambda)$= diffuse Transmission, $A(\lambda)$= Absorption, $W(\lambda)$= Wellenleitung in der Folie.

Die Figur 2 ist eine schematische Darstellung aller Möglichkeiten wie das konvertierte Licht von der der Konversionsfolie abgestrahlt werden kann. $E_v$= Emission vorwärts, $E_r$= Emission rückwärts, $E_s$= Emission zur Seite.

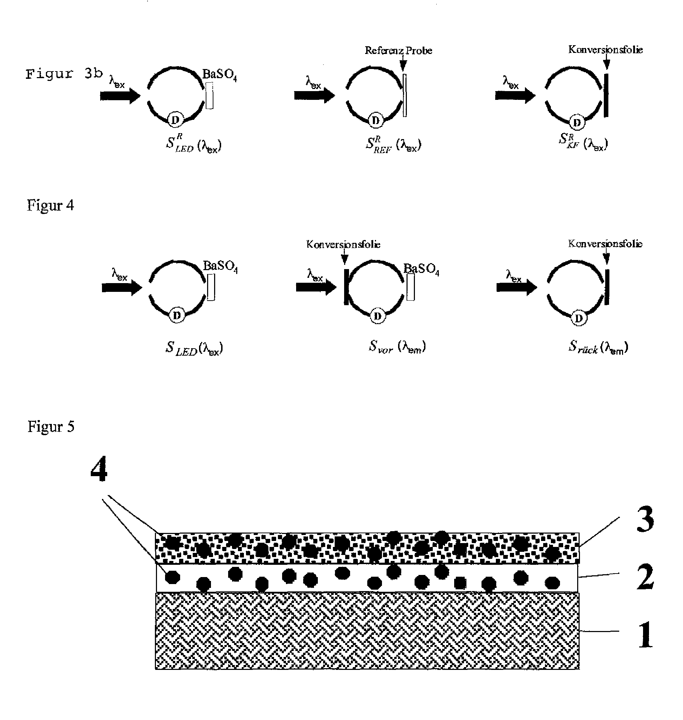

Die Figur 3 a zeigt eine Messanordnung zur Messung der Transmission, und Figur 3 b zur Messung der Reflexion. Der Pfeil repräsentiert das Anregungslicht, der Kreis die Ulbricht-Kugel, welche das von der Probe abgestrahlte Licht räumlich integriert und auf einen Detektor D leitet. Eine Probe wird mit einer Lichtquelle (beispielsweise mit einer mittleren Wellenlänge von 450 nm) bestrahlt und die Abschwächung dieses Lichts durch die Probe wird gemessen. Dabei erfasst die Ulbricht-Kugel das transmittierte Licht aller Raumwinkel ($S^T_{REF}(\lambda_{ex})$ oder $S^T_{KF}(\lambda_{ex})$). Die Transmission einer Probe wird bestimmt, indem man dieses Signal durch das Signal der ungestörten Lichtquelle ohne Probe dividiert ($S^T_{LED}(\lambda_{ex})$). Die Reflexion einer Probe wird gemessen, indem man das von der Probe zurückgestrahlte Licht misst ($S^R_{REF}(\lambda_{ex})$ oder $S^R_{KF}(\lambda_{ex})$) und durch das zurückgestrahlte Licht eines idealen diffusen Reflektors ($S^P_{LED}(\lambda_{ex})$) dividiert. Durch diese Methode können die Transmissions- und Reflexionswerte der Proben mit und ohne Konversionsfarbstoffe ermittelt werden. Die Werte der Wellenleitung kann man aus den Messungen der Reflexion und Transmission einer Referenzprobe ohne Konversionsfarbstoff berechnen unter der Annahme, dass die Absorption bei der eingestrahlten Wellenlänge gleich null ist:

$$W^{REF}(\lambda) = 1 - T^{REF}(\lambda) - R^{REF}(\lambda) - A^{REF}(\lambda) \quad ; \text{ mit } A^{REF}(\lambda) = 0$$

Die Werte der Absorption einer Probe mit Konversionsfarbstoff kann man aus den Messungen der Reflexion und Transmission der Probe berechnen unter der Annahme, dass der Wert der Wellenleitung gleich gross ist, wie in der entsprechenden Referenzprobe ohne Konversionsfarbstoff :

$$A^{KF}(\lambda) = 1 - T^{KF}(\lambda) - R^{KF}(\lambda) - W^{KF}(\lambda) \quad ; \text{ mit } W^{KF}(\lambda) = W^{REF}(\lambda)$$

Die Figur 4 zeigt eine Messanordnung zur Bestimmung der abgestrahlten Fluoreszenzemission. Dazu wird das von der Konversionsfolie umgewandelte Licht, welches eine höhere Wellenlänge besitzt als das eingestrahlte Anregungslicht, gemessen ($S_{vor}(\lambda_{em})$ oder $S_{rück}(\lambda_{em})$) und durch die Intensität des eingestrahlten Lichts bei der Anregungswellenlänge ($S_{LED}(\lambda_{ex})$) dividiert. Bringt man die Konversionsfolie vor die Eintrittsöffnung der Ulbricht-Kugel, erhält man die nach vorne abgestrahlte Fluorezenzintensität. Bringt man die Konversionsfolie auf der andern Seite der Ulbricht-Kugel gegenüber der Eintrittsöffnung an, erhält man die nach rückwärts abgestrahlte Fluoreszenzintensität.

In der Figur 5 ist die kleinste Einheit der erfindungsgemässen Konversionsfolie dargestellt, bestehend aus einem transparenten flexiblen Träger 1, einer direkt darauf aufgebrachten mikro- und mesoporösen Schicht 2, einer direkt darauf aufgebrachten Konversionsschicht 3 mit gezielt in die Schichten 2 und 3 eingeführten Streuzentren 4. Entsprechend der Erfindung können diese Streuzentren 4 in beiden oder nur in einer der Schichten 2 und 3 vorhanden sein.

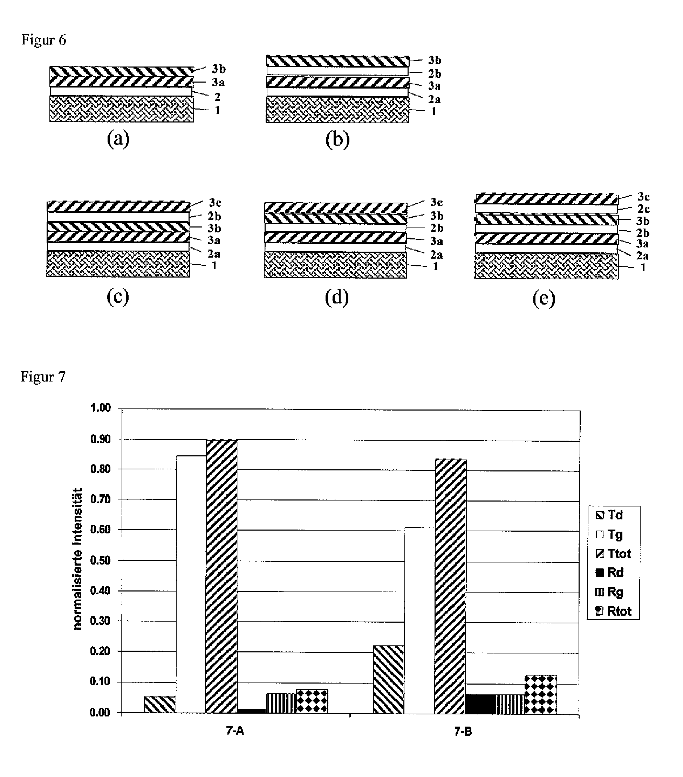

Die Figuren 6, a-e zeigen verschiedene Varianten von Konversionsfolien mit mehreren Konversionsschichten, aufbauend auf der kleinsten Einheit wie in Figur 5 dargestellt,

(a) mit einer zweiten Konversionsschicht 3b auf der ersten Konversionsschicht 3a;

(b) mit einer zweiten Zwischenschicht 2b auf der ersten Konversionsschicht 3a und darauf einer zweiten Konversionsschicht 3b;

(c) mit einer zweiten Konversionsschicht 3b auf der ersten Konversionsschicht 3a, darauf eine zweite Zwischenschicht 2b und eine dritte Konversionsschicht 3c;

(d) mit einer zweiten Zwischenschicht 2b auf der ersten Konversionsschicht 3a, darauf einer zweiten Konversionsschicht 3b und darauf einer dritten Konversionsschicht 3c;

(e) mit einer zweiten Zwischenschicht 2b auf der ersten Konversionsschicht 3a, darauf einer zweiten Konversionsschicht 3b darauf einer dritten Zwischenschicht 2c und darauf einer dritten Konversionsschicht 3c.

Alle Konversionsschichten und Zwischenschichten können dabei unterschiedliche Dicken und Zusammensetzungen haben im Rahmen der beschriebenen Eigenschaften solcher Schichten.

In der Figur 7 ist die gemessene gerichtete Transmission $T_g(\lambda)$, diffuse Transmission $T_d(\lambda)$, totale Transmission $T_{tot}(\lambda)$, gerichtete Reflexion $R_g(\lambda)$, diffuse Reflexion $R_d(\lambda)$ und totale Reflexion $R_{tot}(\lambda)$, von zwei Konversionsfolien aus Beispiel 7 dargestellt, einmal ohne (Beispiel 7-A) und einmal mit $TiO_2$-Streuzentren (Beispiel 7-B) für Licht der Wellenlänge 450 nm.

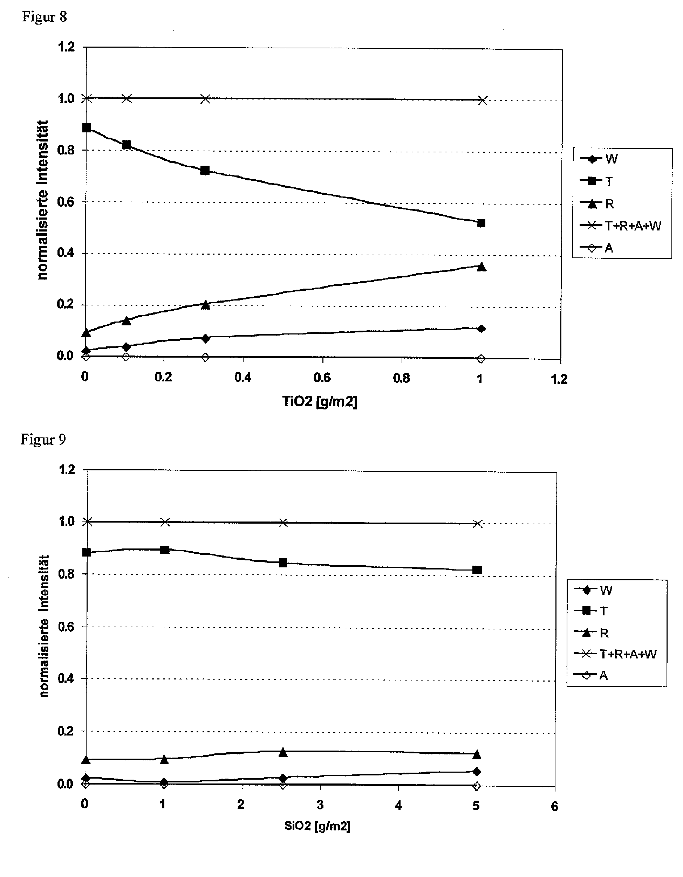

Die Figur 8 zeigt den Einfluss der Konzentration von TiO2-Streuzentren in der Konversionsschicht einer Referenz-Konversionsfolie ohne Konversionsfarbstoff (Beispiele 1-A bis 1-D) auf die Lichtverteilung von senkrecht auf die Probe einfallendem blauem Licht der Wellenlänge 450 nm mit Intensität 1.

Die Figur 9 zeigt den Einfluss der Konzentration von SiO2-Streuzentren in der Konversionsschicht einer Referenz-Konversionsfolie ohne Konversionsfarbstoff (Beispiele 2-A bis 2-D) auf die Lichtverteilung von senkrecht auf die Probe einfallendem blauem Licht der Wellenlänge 450 nm mit Intensität 1.

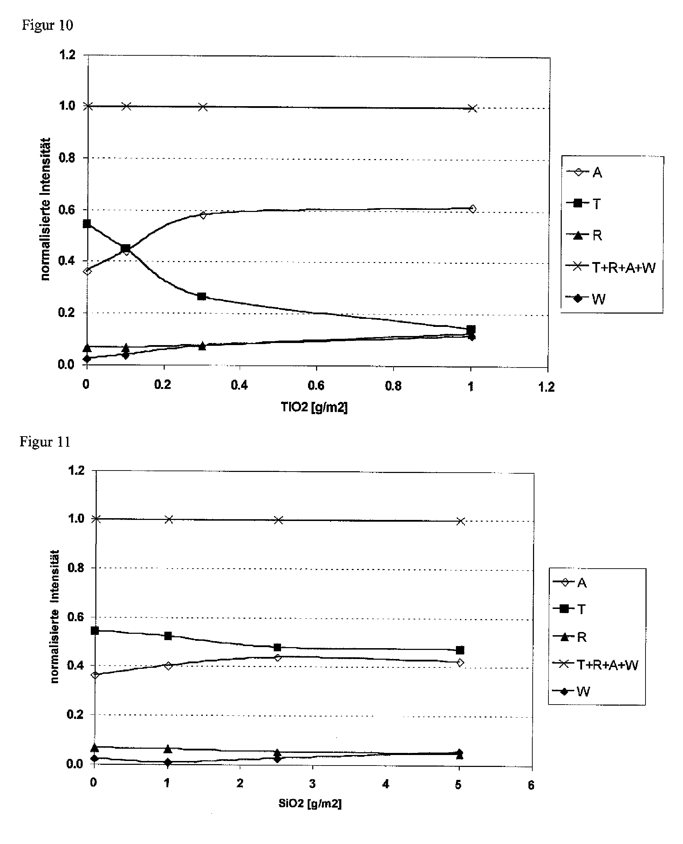

Die Figur 10 zeigt den Einfluss der Konzentration von TiO2-Streuzentren in einer Konversionsschicht mit Konversionsfarbstoff (Beispiele 1-E bis 1-H) auf die Lichtverteilung von senkrecht auf die Probe einfallendem blauem Licht der Wellenlänge 450 nm mit Intensität 1.

Die Figur 11 zeigt den Einfluss der Konzentration von SiO2-Streuzentren in einer Konversionsschicht mit Konversionsfarbstoff (Beispiele 2-E bis 1-H) auf die Lichtverteilung von senkrecht auf die Probe einfallendem blauem Licht der Wellenlänge 450 nm mit Intensität 1.

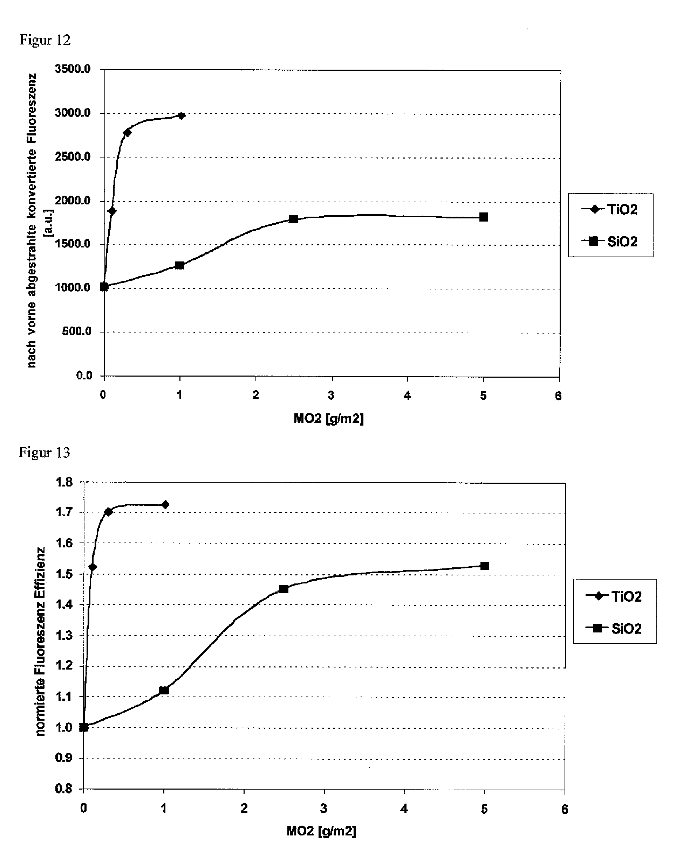

In Figur 12 ist der Einfluss der Konzentration von TiO2- und SiO2-Streuzentren in einer Konversionsschicht mit Konversionsfarbstoff (Beispiele 1-E bis 1-H, resp. 2-E bis 2-H) auf die nach vorne abgestrahlte Fluoreszenzintensität dargestellt.

Die Figur 13 zeigt den Einfluss der Konzentration von TiO2- und SiO2-Streuzentren in einer Konversionsschicht mit Konversionsfarbstoff (Beispiele 1-E bis 1-H resp. 2-E bis 2-H) auf die Fluoreszenzextraktionseffizienz (nach vorne abgestrahlten Fluoreszenzintensität dividiert durch die Absorption).

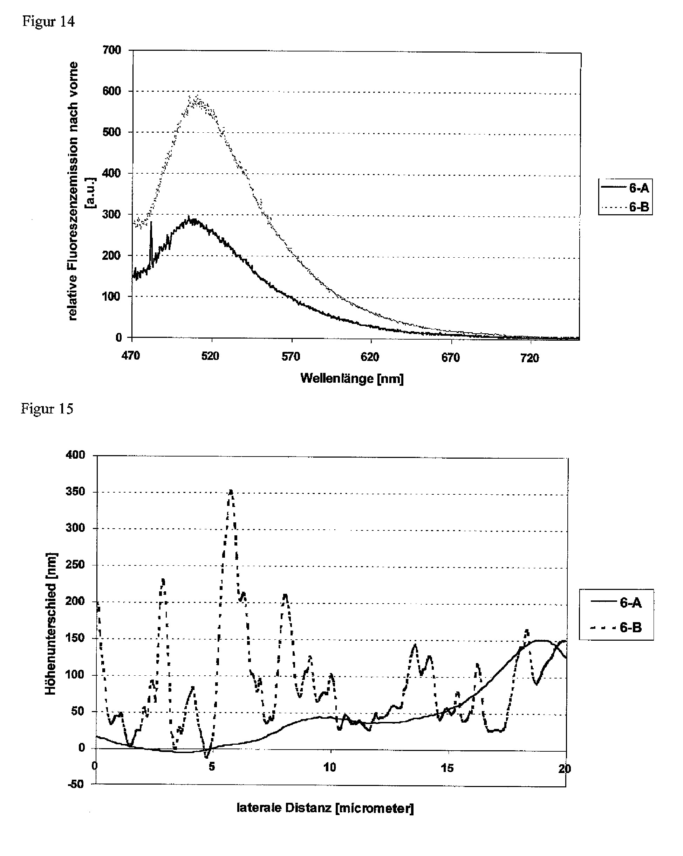

Die Figur 14 zeigt die nach vorne abgestrahlte Fluoreszenz von zwei Proben unterschiedlicher Oberflächenrauhigkeit der Konversionschicht (Beispiele 6-A und 6-B).

Die Figur 15 zeigt das mittels AFM gemessene Rauhigkeitsprofil der Proben 6-A und 6-B.

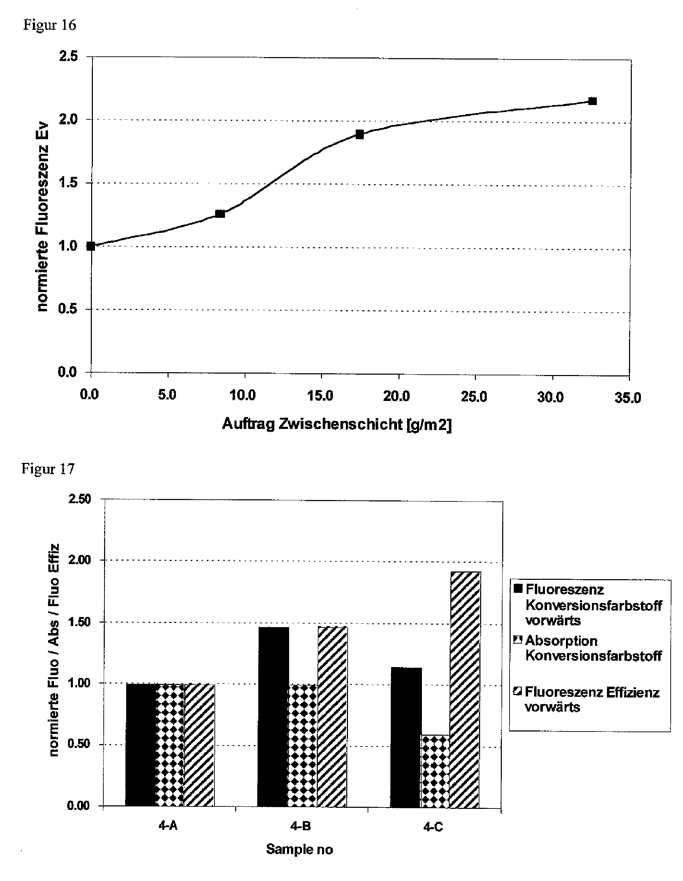

Die Figur 16 zeigt den Einfluss der Schichtdicke einer mikro- und mesoporösen Zwischenschicht auf die nach vorne abgestrahlte Fluoreszenzintensität verschiedener Konversionsfolien: Serie 3-A bis 3-D.

Die Figur 17 zeigt den Einfluss von eingebauten Streuzentren in einer mikro- und mesoporösen Zwischenschicht auf die nach vorne abgestrahlte relative Fluoreszenzintensität, die Absorption und die relative Fluoreszenzextraktionseffizienz. Beispiele 4-A bis 4-C.

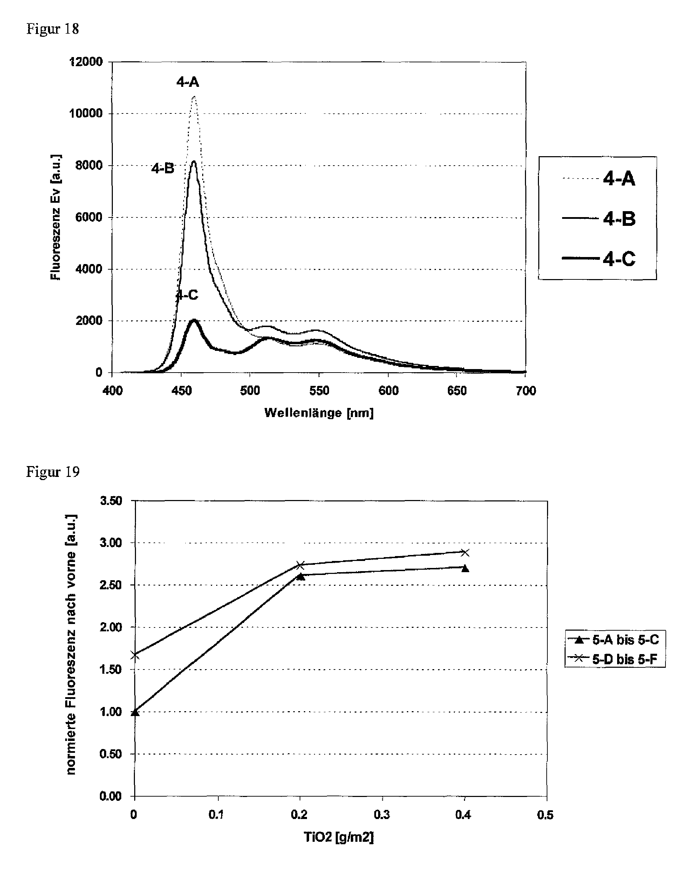

Die Figur 18 zeigt die gemessenen Fluoreszenzspektren der Beispiele 4-A bis 4-C aus Figur 17.

Abschliessend zeigt die Figur 19 den Einfluss der Konzentration von Ti02-Streuzentren in einer Konversionsschicht auf die nach vorne abgestrahlte Fluoreszenzintensität bei Anwesenheit oder Abwesenheit einer mikro- und mesoporösen Zwischenschicht: Beispiele 5-A bis 5-C: ohne mikro- und mesoporöse Zwischenschicht, Beispiele 5-D bis 5-F mit mikro- und mesoporöser Zwischenschicht.

Wie gesagt, ist die Aufgabe der Erfindung die Bereitstellung flexibler Konversionsfolien zur Umwandlung oder Anpassung des Lichtspektrums mit maximaler Konversionsausbeute.

Der für die Erfindung relevante Spektralbereich der Lichtquellen sowie der konvertierten Wellenlängen liegt zwischen 200 nm und 2000 nm, bevorzugt zwischen 200 nm und 700 nm. Die erfindungsgemässen Konversionsfolien enthalten in einem Mehrschichtsystem eine oder mehrere Konversionsschichten und weitere optischen Schichten, um das Licht möglichst effizient umzuwandeln und das umgewandelte Licht möglichst effizient nach vorne abzustrahlen. Diese Konversionsfolien weisen eine hohe mechanische Flexibilität auf und können, erfindungsgemäss, kostengünstig in grossen Mengen und auf grossen Flächen hergestellt werden. Zudem ist es möglich die Absorption, die Lichtkonversion und die räumliche Lichtabstrahlung durch eine geeignete Schichtzusammensetzung und einen geeigneten Schichtaufbau zu optimieren.

Es wurde nun überraschend gefunden, dass solche Konversionsfolien durch eine Kombination von dünnen Konversionsschichten, tiefbrechenden mikro- und mesoporösen Schichten und gezielt eingesetzten Streuzentren erreicht werden können.

Zum besseren Verständnis soll kurz erklärt werden, welchen Einfluss eine Konversionsfolie auf das Licht einer Lichtquelle haben kann. Als Vereinfachung wird angenommen, dass eine monochromatische Lichtquelle (beispielsweise blaues Licht mit einer Wellenlänge von 450 nm) mit einer normierten Intensität von 1 gerichtet auf die Folie strahlt. Die Lichtverteilung kann nun wie folgt schematisch dargestellt werden.

Unter Beziehung auf die oben beschriebene Figur 1 beeinflusst die Konversionsfolie die räumliche Lichtverteilung der einfallenden Strahlung mit Wellenlänge $\lambda$ und kann die Lichtintensität durch Absorption abschwächen. Dabei gilt:

$$1= R_g(\lambda)+R_d(\lambda)+T_g(\lambda)+T_d(\lambda)+A(\lambda)+W(\lambda)$$

mit $R_g(\lambda)$=gerichtete Reflexion, $R_d(\lambda)$= diffuse Reflexion, $T_g(\lambda)$= gerichtete Transmission, $T_d(\lambda)$= diffuse Transmission, $A(\lambda)$= Absorption, $W(\lambda)$= Wellenleitung in der Folie.

Wie genau die Lichtintensität verteilt wird, hängt von den optischen Eigenschaften der Konversionsfolie ab.

Falls die Konversionsfolie bis auf die Absorption des Konversionsfarbstoffs im wesentlichen transparent ist, tritt ein wohlbekanntes Phänomen auf. Da die Konversionsfolie einen höheren Brechungsindex aufweist als die Umgebung (Luft), wirkt die Folie als Wellenleiter. Das eingestrahlte Licht kann unter Umständen in diesen Wellenleiter einkoppeln, was dazu führt, dass ein Teil des Anregungslichts an den Seiten der Folie austritt.

Absorbiert der Konversionsfarbstoff einen Teil des eingestrahlten Lichts, und strahlt er es wieder ab, wirkt er als interne Lichtquelle. Das abgestrahlte Licht kann nun nach rückwärts (in Richtung der Lichtquelle), nach vorne oder zur Seite abgestrahlt werden, oder durch einen anderen Konversionsfarbstoff absorbiert werden. Die Lichtabstrahlung zur Seite ist bei transparenten Konversionsfolien sehr gut bekannt und sie kann wiederum auf die Wellenleitereigenschaften solcher Folien zurückgeführt werden. Diese Lichtabstrahlung zur Seite kann sehr störend sein, wenn bei der Anwendung der Konversionsfolie die Lichtabstrahlung senkrecht zum Film gewünscht wird. Die Figur 2 zeigt schematisch, wie das abgestrahlte Licht räumlich aufgeteilt werden kann: $E_V$=Emission vorwärts, ER=Emission rückwärts, Es=Emission zu Seite.

In der erfindungsgemässen Konversionsfolie ist es möglich, die in Figuren 1 und 2 dargestellten Lichtteile gleichzeitig zu beeinflussen, nämlich die Absorption zu erhöhen, die Wellenleitung zu unterdrücken und die Lichtextration in vorwärts Richtung zu erhöhen ohne einen Grossteil des Anregungslichts durch Rückreflexion zu verlieren. Dies wird in der Folge als "Erhöhung der Konversionseffizienz" bezeichnet.

Prinzipiell könnte die räumliche Verteilung des abgestrahlten Lichts damit beeinflusst und die Konversionseffizienz hiermit erhöht werden, dass man die Konversionsschicht genügend dünn macht, so dass sie keinen guten Wellenleiter mehr darstellt und sie vom transparenten Träger optisch isoliert. Wird zwischen der Konversionsschicht und dem Träger eine Zwischenschicht mit tiefem Brechungsindex verwendet, kann die Wellenleitung abgeschwächt und die Fluoreszenzabstrahlung senkrecht zur Folie erheblich erhöht werden. Eine mikro- und mesoporöse Schicht mit tieferem Brechungsindex als die Konversionsschicht eignet sich sehr gut als solche Zwischenschicht.

Eine andere Möglichkeit die räumliche Verteilung des abgestrahlten Lichts zu beeinflussen und die Konversionseffizienz zu erhöhen ist die gezielte Einführung von Streuzentren. Die Einführung von Streupartikeln können zu zwei Arten von Streuzentren führen. Zum einen kann das Licht direkt an den Partikeln in der Schicht gestreut werden, falls ein Brechungsindex-Unterschied zwischen Partikeln und dem umgebenden Schichtmaterial besteht und die Partikel nicht kleiner sind als die betreffende Wellenlänge des Lichts. Zum Anderen kann die Einführung von Partikeln die Oberflächenrauhigkeit der Schicht erhöhen, was zu einer erhöhten Lichtstreuung an der Oberfläche führt. Die direkte Streuung in der Schicht vermindert den Anteil an gerichteter Transmission und erhöht die Anteile diffuser Transmission und Reflexion. Die Streuung des Lichts führt dann dazu, dass der optische Weg in der Konversionsfolie verlängert wird, was wiederum die Absorption erhöht. Die Streuung unterdrückt gleichzeitig auch die Wellenleitung und fördert die Lichtextraktion aus der Folie.

Eine besonders bevorzugte Möglichkeit die räumliche Verteilung des abgestrahlten Lichts zu beeinflussen und die Konversionseffizienz zu erhöhen besteht in der Kombination der beiden beschriebenen Effekte, wobei die Konversionsschicht vom transparenten Träger mittels einer Zwischenschicht optisch isoliert wird und direkt in die Konversionsschicht gezielt Streuzentren eingeführt werden.

Eine weitere besonders bevorzugte Möglichkeit die räumliche Verteilung des abgestrahlten Lichts zu beeinflussen und die Konversionseffizienz zu erhöhen besteht darin, Streuzentren ausserhalb der Konversionsschicht einzuführen. Dies kann beispielsweise durch Einführen von Streuzentren in die tiefbrechende Zwischenschicht, welche die Konversionsschicht vom Träger optisch isoliert erfolgen. Dadurch lässt sich die Fluoreszenzextraktionseffizienz deutlich erhöhen. Das kann dann von Interesse sein, wenn man vor allem die Intensität des nach vorne abgestrahlte Anregungslicht verringern möchte ohne die Intensität des nach vorne abgestrahltem konvertierten Lichts zu verringern. In diesem Fall streuen die Streuzentren einen Teil des Anregunslichts nach rückwärts und einen erhöhten Anteil des konvertierten Lichts nach vorne und beeinflusen so die Farbbalance des nach vorne abgestrahlten Lichts.

Eine weitere Möglichkeit die räumliche Verteilung des abgestrahlten Lichts zu beeinflussen und die Konversionseffizienz zu erhöhen besteht darin, auf die Konversionsschicht eine weitere Schicht aufzubringen, welche einen Brechungsindex besitzt der zwischen jenem der Konversionsschicht und der umgebenden Luft ist. Diese Schicht vermindert die Reflexion an der Grenzschicht zur Umgebungsluft und erhöht dadurch die Lichtextraktion. Solche Schichten sind sehr gut bekannt und werden als Antireflexschichten eingesetzt. Beispiele solcher Schichten werden beispielsweise im Patent US4759990 und US4583822 beschrieben.

Eine Möglichkeit die Konversionseffizienz zusätzlich zu erhöhen ist die Verminderung der gerichteten Reflexion durch das Aufbringen einer tiefbrechenden Antireflexionschicht auf den transparenten Träger.

Ferner kann die räumliche Verteilung des abgestrahlten Lichts noch dadurch beeinflusst und die Konversionseffizienz erhöht werden, dass man die Oberfläche der Konversionsschicht mit optischen Elementen, wie Mikrolinsen, Fresnellinsen oder Polymerkuglen versieht, wie dies beispielsweise im in der PCT Anmeldungen WO2007/011154 und WO01/41225 oder in M. Guillaumée's Artikel in Proc. of SPIE Nanophotonics II Vol. 6988,698811, (2008) beschrieben ist.

Im folgenden wird die Erfindung an Hand einer Detailbeschreibung aller in den verschiedenen Ausführungsarten verwendeten Schichten und ihrer Zusammensetzungen sowie Herstellungsverfahren näher erläutert.

Beginnend mit der kleinsten Einheit der erfindungsgemässen Konversionsfolie, zeigt die Figur 5 eine transparenten flexiblen Träger 1, mindestens eine direkt darauf aufgebrachten mikro- und mesoporösen Schicht 2, sowie mindestens eine direkt darauf aufgebrachten Konversionsschicht 3 mit gezielt eingeführten Streuzentren.

Diese drei Schichten werden nun einzeln im Detail beschrieben, wobei die Zwischenschicht und die Konversionsschicht jeweils mit und ohne Streuzentren betrachtet werden.

Aus der Vielzahl der einzeln aufgeführten Varianten versteht es sich, dass alle beschriebenen Varianten einer bestimmten Schicht mit allen Varianten anderer Schichten kombiniert werden können.

**Flexible Träger**

Als flexible Träger für die erfindungsgemässen Materialien sind eine grosse Vielfalt an biegsamen Trägern geeignet, wie sie unter anderem in der photographischen Industrie eingesetzt werden. Zur Herstellung der erfindungsgemässen Materialien können alle Träger, die bei der Herstellung von photographischen Materialien verwendet werden, eingesetzt werden, so beispielsweise transparente Träger aus Celluloseestern wie Cellulosetriacetat, Celluloseacetat, Cellulosepropionat oder Celluloseacetat/butyrat, Polyester wie Polyethylenterephthalat oder Polyethylennaphthalat, Polyamide, Polycarbonate, Polyimide, Polyolefine, Polyvinylacetale, Polyether, Polyvinylchlorid und Polyvinylsulfone. Bevorzugt werden Polyester, insbesondere Polyethylenterephthalat wie beispielsweise Cronar® von Du-Pont Tejin Films oder Polyethylennaphthalat wegen ihrer ausgezeichneten Dimensionsstabilität.

Weiter können auch Träger bestehend aus Acylonitril-Butadien-Styrol, Polycarbonat, Polyetherinid, Polyetherketon, Polymethylmetacrylat, Polyoxymethylen und Polystyrol verwendet werden.

Es ist vorteilhaft, diese Träger, insbesondere Polyester, vor dem Beguss mit einer Substrierschicht zu versehen, um die Haftung der Schichten auf dem Träger zu verbessern. Solche Substrierschichten sind in der photographischen Industrie wohlbekannt und enthalten z. B. Terpolymere aus Vinylidenchlorid, Acrylnitril und Acrylsäure oder aus Vinylidenchlorid, Methylacrylat und Itaconsäure. Die Haftung der Schichten auf dem Träger kann beispielsweise auch durch eine Corona- oder Corona/Aerosol-Behandlung des Trägers vor dem Beguss verbessert werden.

Alle diese flexiblen Träger können auch mit einer weitgehend transparenten elektrisch leitenden Schicht versehen sein. Bevorzugt werden mit Metallen oder mit Indium-Zinn-Oxid beschichtete Kunststoffträger.

Alle diese Träger können auch dreidimensionale Oberflächenstrukturen aufweisen

**Mikro- und mesoporöse Zwischenschicht**

Die mikro- und mesoporösen Zwischenschicht mit dem tiefen Brechungsindex, welche anorganische Nanopartikel enthält, weist im erfindungsgemässen Material eine Trockenschichtdicke zwischen 2 $\mu$m und 60 $\mu$m, vorzugsweise zwischen 5 $\mu$m und 50 $\mu$m, besonders bevorzugt zwischen 20 $\mu$m und 40.0 $\mu$m auf.

Die mikro- und mesoporösen Schichten mit einem tiefen Brechungsindex enthalten anorganische Nanopartikel und gegebenenfalls eine geringe Menge an Bindemitteln und anderen Zusätzen. Sie weisen nach der Trocknung ein bestimmtes, messbares Porenvolumen auf. Das Porenvolumen lässt sich beispielsweise mittels des BET-Verfahrens bestimmen. Das BET-Verfahren zur Bestimmung der Porenvolumen wurde von S. Brunauer, P. H. Emmet und I. Teller in "Adsorption of Gases in Multimolecular Layers", Journal of the American Chemical Society 60, 309 - 319 (1938) beschrieben.

Eine einfachere Methode besteht darin, die Poren mit einem geeigneten Lösungsmittel bekannter Dichte zu füllen und durch die Gewichtszunahme der Schicht direkt das Porenvolumen zu bestimmen. Die erfindungsgemässen mikro- und mesoporösen Schichten haben ein so bestimmtes Porenvolumen zwischen 0.1 ml/g und 2.5 ml/g, wobei die Bezugsgrösse das Einheitsgewicht der mikro- und mesoporösen Schicht, welche anorganische Nanopartikel enthält, ist.

In den erfindungsgemässen Konversionsfolien werden Zwischenschichten mit derart bestimmte Porenvolumen zwischen 0.2 ml/g und 2.5 ml/g bevorzugt, besonders bevorzugt sind Porenvolumen zwischen 0.4 ml/g und 2.5 ml/g.

Der Brechungsindex der mikro- und mesoporösen Schicht, welche anorganische Nanopartikel enthält, wird durch die Porosität beeinflusst. Eine Erhöhung der Porosität führt zu einer Erniedrigung des Brechungsindex. Dadurch können theoretisch Brechungsindices zwischen 1.00 (Luft) und jenem der verwendeten anorganischen Nanopartikel eingestellt werden, beispielsweise der Wert 1.45 bei Verwendung von SiO2 als anorganische Nanopartikel. Die in der Praxis für die beschriebenen Anwendungen relevanten Brechungsindices zwischen 1.05 bis 1.40 können auf diese Weise erreicht werden.

Der effektive Brechungsindex solcher Schichten kann näherungsweise berechnet werden, indem die volumengewichtete Summe des Brechungsindex des Nanopartikel-Netzwerks und des Brechungsindex der gasgefüllten Porengebildet wird.

Beispielsweise hat so eine mikro- und mesoporöse Schicht mit einer Porosität von 80 vol%, welche hauptsächlich $SiO_2$-Nanopartikel mit dem Brechungsindex 1.45 und Luft mit dem Brechungsindex 1.00 enthält, einen effektiven Brechungsindex von 1.09.

Nach dem Auftrag der Beschichtungslösung für die mikro- und mesoporösen Schicht mit dem tiefen Brechungsindex, welche anorganische Nanopartikel enthält, kommt es während der Trocknung der Schicht allmählich zur Bildung eines dreidimensionalen Netzwerks dieser Nanopartikel. Die Zwischenräume dieses Netzwerks sind mit dem verwendeten Lösungsmittel und gegebenenfalls den anderen verwendeten Zusätzen gefüllt. Bei der weiteren Trocknung wird das verwendete Lösungsmittel entfernt. Bei Verwendung von genügend kleinen Mengen an Zusätzen, wie beispielsweise der Bindemittel, bleiben die Zwischenräume innerhalb der Aggregate sowie dazwischen weitgehend erhalten und es entstehen im Netzwerk der Nanopartikel mit Gas gefüllten Poren. Dieses aus zwei Phasen, einer festen und einer gasförmigen, bestehende dreidimensionale Netzwerk weist dabei Strukturen mit Dimensionen im Submikrometerbereich auf.

Durch eine gezielte Kontrolle der Grösse dieser Strukturen können die Streueffekte und damit auch die Transparenz der erfindungsgemässen Schichten beeinflusst werden. Diese Effekte können beispielsweise an Schichten auf einem transparenten Polymerträger durch die optische Transmission charakterisiert werden

Als anorganische Nanopartikel zur Herstellung der mikro- und mesoporösen Schichten mit einem tiefen Brechungsindex können beispielsweise natürliche, ausgefällte oder staubförmige Metalloxide, Metalloxid/hydroxide und natürliche oder synthetische Zeolithe verwendet werden. Als Metalloxide können beispielsweise $SiO_2$ oder $Al_2O_3$, $TiO_2$, ZnO, $ZrO_2$ und $SnO_2$ oder das Mischoxid Indium-Zinn-Oxid verwendet werden. Als Metalloxid/hydroxid kann beispielsweise AlOOH verwendet werden. Es ist auch möglich, Gemische aller dieser Verbindungen zu verwenden.

Bevorzugt werden anorganische Nanopartikel mit einem Brechungsindex von weniger als 1.70 bei einer Wellenlänge von 550 nm. Besonders bevorzugte anorganische Nanopartikel sind ausgefälltes oder staubförmiges Siliziumdioxid, Aluminiumoxid, Aluminiumoxid/hydroxid und die Zeolithe Zeolite Beta, ZSM-5, Mordenite, LTA (Linde Type A), Faujasite und LTL (Linde Type L).

Offizielle Strukurbezeichnungen der vorhin erwähnten Zeolithe können beispielsweise dem Buch von C. Bärlocher, W. M. Meier und D. H. Olson, "Atlas of Zeolite Framework Types", 5. Ausgabe, Verlag Elsevier (2001), ISBN 0-444-50701-9 entnommen werden.

Die Grösse der anorganischen Nanopartikel (Primärpartikel) kann durch bildgebende Verfahren, wie beispielsweise hochaufgelöste Transmissionselektronen-Mikroskopie oder Rasterelektronen-Mikroskopie, bestimmt werden.

Der mittlere Partikeldurchmesser der anorganischen Nanopartikel (Primärpartikel) liegt vorzugsweise zwischen 5 nm und 200 nm, besonders bevorzugt ist der Grössenbereich zwischen 10 nm und 60 nm. Die anorganischen Nanopartikel haben bevorzugt eine enge Korngrössenverteilung, wobei mindestens 90 % der Primärpartikel einen kleineren Durchmesser als den doppelten vorhin erwähnten mittleren Partikeldurchmesser haben und praktisch keine Primärpartikel einen grösseren Durchmesser als den dreifachen vorhin erwähnten mittleren Partikeldurchmesser haben.

Die anorganischen Nanopartikel liegen vorzugsweise in Form von lockeren Aggregaten (Sekundärpartikel) vor wodurch sich ein messbares BET Porenvolumen ergibt.

Beim besonders bevorzugten Siliziumdioxid können zwei verschiedene Arten verwendet werden, erstens ein in einem Nassverfahren hergestelltes ausgefälltes Siliziumdioxid und zweitens ein in einem Gasphasenverfahren hergestelltes staubförmiges Siliziumdioxid.

Ausgefälltes Siliziumdioxid kann beispielsweise im Nassverfahren durch Metathese von Natriumsilikat durch eine Säure oder durch Hindurchleiten durch eine Schicht aus Ionenaustauscherharz als Siliziumdioxidsol, durch Erhitzen und Reifen dieses Siliziumdioxidsols oder durch Gelieren eines Siliziumdioxidsols hergestellt werden.

Staubförmiges Siliziumdioxid wird im allgemeinen in einem Flammenhydrolyseverfahren hergestellt, beispielsweise durch Verbrennung von Siliziumtetrachlorid mit Wasserstoff und Sauerstoff. Beispiel eines solchen staubförmigen Siliziumdioxids ist Aerosil® 200 ($SiO_2$ mit einem isoelektrischen Punkt bei pH 2.0), erhältlich bei DEGUSSA AG, Frankfurt/ Main, Deutschland. Diese Substanz hat gemäss ihrem Datenblatt eine spezifische BET-Oberfläche von etwa 200 $m^2/g$ und eine Primärpartikelgrösse von etwa 12 nm. Ein weiteres Beispiel ist Cab-O-Sil® M-5, erhältlich bei Cabot Corporation, Billerica, USA. Dieses Produkt hat gemäss seinem Datenblatt eine spezifische BET-Oberfläche von etwa 200 $m^2/g$ und eine Grösse der Primärpatikel von etwa 12 nm. Die Aggregate sind 0.2 $\mu m$ bis 0.3 $\mu m$ lang.

In der vorliegenden Erfindung wird vorzugsweise staubförmiges Siliziumdioxid mit einer durchschnittlichen Grösse der Primärpartikel von höchstens 20 nm und einer spezifischen Oberfläche von mindestens 150 $m^2/g$, bestimmt mit dem BET-Verfahren, verwendet.

Der ebenfalls bevorzugte Zeolite Beta ist in Form von Nanopartikeln mit einer mittleren Grösse von 30 nm bei NanoScape AG, München, Deutschland erhältlich. Die weiteren nanokristallinen Zeolithe (die Grösse der Primärpartikel ist in Klammern angegeben) ZSM-5 (70 nm - 100 nm), Mordenite (500 nm), LTA (90 nm), Faujasite (80 nm) und LTL (50 nm) sind ebenfalls dort erhältlich.

Als Metalloxid/hydroxid kann beispielsweise Aluminiumoxid/hydroxid verwendet werden. Besonders bevorzugt ist Pseudoböhmit.

Die Herstellung der Aluminiumoxid/hydroxide im Sol-Gel-Verfahren erfolgt mit Vorteil in gänzlicher Abwesenheit von Säure, wie es beispielsweise im Patent DE 3'823'895 beschrieben wird.

Ein bevorzugtes Aluminiumoxid ist γ-Aluminiumoxid.

Die Oberfläche der anorganischen Nanopartikel kann modifiziert werden, um die möglicherweise vorhandenen Agglomerate der Primärpartikel während des Dispergiervorgangs in kleinere Einheiten aufzubrechen und diese zu stabilisieren. Die Grösse der dispergierten Partikel hat einen erheblichen Einfluss auf die Transparenz der mikro- und mesoporösen Schicht, welche diese Nanopartikel enthält. Die Oberflächenmodifikation kann auch dazu dienen, die Verträglichkeit der Nanopartikeloberflächen mit den verwendeten Bindemitteln und/oder Lösungsmitteln beziehungsweise Dispergiermitteln zu verbessern. Bei einer solchen Modifikation kann eine ungeladene, eine positiv geladene oder eine negativ geladenen Oberfläche erzeugt werden.

Eine bevorzugte Art der Oberflächenmodifizierung zur Erzeugung einer postiv geladenen Oberfläche von Siliziumdioxid ist diejenige mit Polyaluminiumhydroxychlorid, wie sie beispielsweise in der Patentanmeldung DE 10'020'346 vorgeschlagen wird. In der Patentanmeldung WO 00/20'221 wird die Oberflächenmodifizierung von in der Gasphase hergestelltem Siliziumdioxid mit Aluminiumchlorhydrat beschrieben.

Eine andere bevorzugte Art der Oberflächenmodifizierung von Siliziumdioxid ist diejenige mit Aminoorganosilanen, wie sie beispielsweise in der Patentanmeldung EP 0'663'620 beschrieben wird.

Eine besonders bevorzugte Art der Oberflächenmodifizierung von Siliziumdioxid wird in der europäischen Patentanmeldung EP 1'655'348 beschrieben, in welchem die Oberfläche des Siliziumdioxids mit den Reaktionsprodukten mindestens eines Aminoorganosilans und einer Verbindung des dreiwertigen Aluminiums umgesetzt wird.

Bevorzugte Verbindungen des dreiwertigen Aluminiums für die Oberflächenmodifizierung mit den Reaktionsprodukten aus einer Verbindung des dreiwertigen Aluminiums und eines Aminoorganosilans sind Aluminiumchlorid, Aluminiumnitrat, Aluminiumacetat, Aluminiumformiat und Aluminiumchlorhydrat.

Die Menge der Verbindung des dreiwertigen Aluminiums liegt typischerweise zwi-schen 0.1 Gewichtsprozent und 20 Gewichtsprozent bezogen auf die Menge des Siliziumdioxids. Bevorzugt ist ein Wert zwischen 0.5 Gewichtsprozent und 10 Gewichtsprozent.

Besonders bevorzugte Aminoorganosilane für die Oberflächenmodifizierung mit den Reaktionsprodukten aus einer Verbindung des dreiwertigen Aluminiums und eines Aminoorganosilans sind 3-Aminopropyltrimethoxysilan, N-(2-Aminoethyl)-3-aminopropyltrimethoxysilan, (3-Triethoxysilylpropyl)-diethylentriamin, 3-Aminopropyltriethoxysilan, N-(2-Aminoethyl)-3-aminopropyltriethoxysilan, (3-Triethoxysilylpropyl)-diethylentriamin und deren Gemische.

Die Gesamtmenge des Aminoorganosilans beziehungsweise des Gemisches von Aminoorganosilanen liegt typischerweise zwischen 0.1 Gewichtsprozent und 20 Gewichtsprozent bezogen auf die Menge des Siliziumdioxids. Bevorzugt ist ein Wert zwischen 0.5 Gewichtsprozent und 10 Gewichtsprozent.

Das Gewichtsverhältnis zwischen der Verbindung des dreiwertigen Aluminiums (beispielsweise Aluminiumchlorhydrat) und der Aminoorganosilane wird vorteilhaft so gewählt, dass bei der Mischung der beiden Komponenten der beiden Reagen-zien der gewünschte pH-Wert erreicht wird. Bevorzugt wird ein Molverhältnis zwi-schen 0.1 und 2.0, besonders bevorzugt ist ein Molverhältnis zwischen 0.4 und 1.5, bezogen auf die Anzahl der Aluminiumatome und die Anzahl der Aminogrup-pen des Aminoorganosilans.

Besonders bevorzugt für die Oberflächenmodifizierung mit den Reaktionsprodukten aus einer Verbindung des dreiwertigen Aluminiums und mindestens eines Aminoorganosilans ist staubförmiges Siliziumdioxid mit einer Grösse der Primärpartikel von höchstens 20 nm.

Die Dispergierung bei hohen Scherraten ergibt eine gleichmässige Verteilung der Reaktionsprodukte auf dem Siliziumdioxid. Weiter wird das rheologische Verhalten der Dispersion verbessert.

In den mikro- und mesoporösen Zwischenschichten mit tiefem Brechungsindex, welche anorganische Nanopartikel enthalten, sind die anorganischen Nanopartikel in Mengen zwizwischen 2 g/m2 und 60 g/m2, vorzugsweise zwischen 5 g/m2 und 50 g/m2, besonders bevorzugt zwischen 10 g/m2 und 30 g/m2 vorhanden.

Die Menge des in der mikro- und mesoporösen Schicht vorhandenen Bindemittels sollte genügend klein sein, um die gewünschte Porosität zu erreichen, aber auch genügend hoch, um stabile, gut auf dem flexiblen Träger haftende Beschichtungen ohne Brüchigkeit herstellen zu können. Mengen bis 60 Gewichtsprozent des Bindemittels bezogen auf die Gesamtmenge der anorganischen Nanopartikel können verwendet werden, bevorzugt sind aber Mengen zwischen 0.5 Gewichtsprozent und 40.0 Gewichtsprozent Bindemittel bezogen auf die Gesamtmenge der anorganischen Nanopartikel in der mikro- und mesoporösen Schicht mit dem tiefen Brechungsindex. Besonders bevorzugt werden Mengen zwischen 10.0 Gewichtsprozent und 30.0 Gewichtsprozent, bezogen auf die Gesamtmenge der anorganischen Nanopartikel in der mikro- und mesoporösen Schicht mit dem tiefem Brechungsindex.

Geeignete Bindemittel für die mikro- und mesoporöse Schicht mit dem tiefen Brechungsindex, welche anorganische Nanopartikel enthält, sind im allgemeinen wasserlösliche hydrophile Polymere.

Synthetische, natürliche oder modifizierte natürliche wasserlösliche Polymere wie beispielsweise vollständig oder teilweise hydrolysierter Polyvinylalkohol oder Copolymere aus Vinylacetat und anderen Monomeren; modifizierte Polyvinylalkohole; Polyvinylpyrrolidon, Polyethylenoxide; Homopolymere oder Copolymere von (Meth)acrylamid; Polyvinylpyrroildone, Polyvinylacetale, Polyurethane sowie Stärke oder modifizierte Stärke, Cellulose oder modifizierte Cellulose wie Hydroxyethylcellulose, Carboxymethylcellulose und Gelatine können verwendet werden, wie auch Mischungen dieser Polymere.

Besonders bevorzugte synthetische Bindemittel für die mikro- und mesoporöse Schicht mit dem tiefen Brechungsindex, welche anorganische Nanopartikel enthält, sind modifizierter und unmodifizierter Polyvinylalkohol, Polyvinylpyrrolidon oder ihre Gemische.

Die oben erwähnten Bindemittel mit vernetzbaren Gruppen können mit Hilfe eines Vernetzers oder Härters zu praktisch wasserunlöslichen Schichten umgesetzt werden. Solche Vernetzungen können kovalent oder ionisch sein. Die Vernetzung oder Härtung der Schichten erlaubt eine Veränderung der physikalischen Schichteigenschaften, wie beispielsweise der Flüssigkeitsaufnahme, der Dimensionsstabilität unter Einwirkung von Flüssigkeiten, Dämpfen oder Temperaturänderungen oder der Widerstandsfähigkeit gegen Schichtverletzungen und Brüchigkeit.

Die Vernetzer und Härter werden auf Grund der zu vernetzenden wasserlöslichen Polymere ausgesucht.

Organische Vernetzer und Härter umfassen z. B. Aldehyde (wie Formaldehyd, Glyoxal oder Glutaraldehyd); N-Methylolverbindungen (wie Dimethylolharnstoff oder Methylol-Dimethylhydantoin); Dioxane (wie 2,3-Dihydroxydioxan); reaktive Vinylverbindungen (wie 1,3,5-Trisacryloyl-Hexahydro-s-Triazin oder Bis-(Vinylsulfonyl)ethylether), reaktive Halogenverbindungen (wie 2,4-Dichloro-6-Hydroxy-s-Triazin); Epoxide; Aziridine; Carbamoylpyridinverbindungen oder Mischungen zweier oder mehrerer dieser erwähnten Vernetzer.

Anorganische Vernetzer und Härter umfassen beispielsweise Chromalaun, Aluminiumalaun, Borsäure, Zirkoniumverbindungen oder Titanocene.

Die Schichten können auch reaktive Substanzen enthalten, welche die Schichten unter Einwirkung von UV-Licht, Elektronenstrahlen, Röntgenstrahlen oder Wärme vernetzen.

Die Polymere können mit wasserunlöslichen natürlichen oder synthetischen hochmolekularen Verbindungen gemischt werden, insbesondere mit Acryllatices oder Styrolacryllatices.

**Konversionsschichten**

Konversionsfarbstoffe, welche Absorptions- und Emissionsbanden im interessanten Spektralbereich aufweisen (zwischen 200 nm und 2000 nm, bevorzugt zwischen 200 nm und 700 nm) werden im folgenden im Detail beschrieben.

Mit Konversionsfarbstoffen sind in diesem Text immer Stoffe gemeint, die elektromagnetische Strahlung einer ersten Wellenlänge absorbieren und daraufhin elektromagnetische Strahlung höherer Wellenlänge abgeben.

Beispiele solcher für die Erfindung interessanter Konversionsfarbstoffe sind lösliche Substanzen, welche in Polymere oder Öl eingearbeitet werden können:

Organische Fluoreszenzfarbstoffe:

Derartige Farbstoffe gibt es in schier unbegrenzter Auswahl. Beispiele sind Perylene (wie die unter dem Handlesnamen Lumogen bekannten Farbstoffe der Firma BASF: Lumogen F240 Orange, Lumogen F305 Red Lumogen F083 Yellow, Lumogen F850 Green), Yellow 172 der Firma Neeliglow, Indien und Farbstoffe wie Coumarine (z. B.: Coumarin 6, Coumarin 7, Coumarin 30, Coumarin 153, basic yellow 51), Naphthalimide (z. B. solvent Yellow 11, solvernt Yellow 116) Fluorol tGA, Pyridine (z.B. Pyridin 1) Pyrromethene (z.B. Pyrromethen 546, Pyrromehten 567), Uranin, Rhodamine (z. B. Rhodamin 110, Rhodamin B, Rhodamin 6G, Rhodamin3B, Rhodamin 101, Sulforhodamin 101, Sulforhodamin 640, Basic Violet 11, Basic Red 2), Cyanine (z. B. Phthalocyanine, DCM), Stilbene (z.B. Bis-MSB, DPS), die bei zahlreichen Händlern erhältlich sind. Verschiedene andere Farbstoffe, wie saure Farbstoffe, basische Farbstoffe, direkte Farbstoffe und Dispersionsfarbstoffe könne verwendet werden, solange sie eine für die gewünschte Anwendung genügend hohe Fluorezenzquantenausbeute aufweisen.

Ferner kann man anführen:

Lumineszierende metallorganische Komplexe,

Fluoreszierende Dendrimere,

Organische Farbstoff-Komplexe mit Cyclodextrinen,...

Beispiele anderer für die Erfindung interessanter Konversionsfarbstoffe sind feste Partikel, welche in Polymeren dispergiert werden können:

Beispiele solcher Konversionsfarbstoffe sind Mikropartikel anorganischer Phosphore mit Brechungsindex im Bereich der verwendeten Polymere oder Nanopartikel anorganischer Phosphore: Cer-dotierte Granate der allgemeinen Formel A3X5O12:Ce (mit A=Y, Gd oder Tb; X= Al oder Ga, z.B. Y3Al5O12:Ce) ,der Formel Y3X5A12:Ce (mit X= Al oder Si, A= N oder O) oder der Formel (Y, Ga)3(Al, Ga)5O12:Ce, ZnS:Cu;Mn, ZnS:Cu, Orthosilikate bevorzugterweise der Formel X2SiO4:Eu (mit X= Sr, Ba oder Ca), Nitride, Oxynitridsilkate der Formel XSi2O2N2:Eu (mit X= Sr, Ba oder Ca), Nitridsilikate (wie z. B. Ca2Si5N8:Eu, Sr2Si5N8:Eu und CaAlSiN3:Eu), ionische Phosphore (wie z.B. SrGa2S4: Eu2+, (Sr, Ca)2Si5N8:Eu2+, CaSiAlN3:Eu2+, SrSi2O2N2:EU2+ oder SrS:Eu2+), La2O2:Eu, La2O2S:Eu, (BaMgAl) 10O12:Eu, Mn, (Sr, Ca, Ba, Mg)10(PO4)6O12:Eu, Y2O2S:Eu, Y-VO:Eu, SM (M= Li, na, K, Ba, Ca oder Mg), TG(SrGa2S4: Eu2+, (BaSr)SiO:EuM8M= Ho, Er, Ce oder Y), Ca10(PO4)6Cl2:Eu2+, Sr5(PO4)3Cl:Eu oder Phosphore, welche im Patent WO2005/051846 beschrieben sind.

Andere Beispeiele sind anorganische quantum dots, wie beispielsweise: CdSe, CdS, CdTe, InP, InAs, GaAs, GaN, Si, ZnSe, ZnTe, ZnS, PbSe und Mischungen daraus oder gemischte Mehrschichtpartikel daraus.

Andere mögliche Konversionsfarbstoffe dieses Typs sind anorganisch-organische Hybridmaterialien, wie z.B. organische Farbstoffe in Metaloxid Partikeln wie SiO2, Ti02 ,in mikro- und mesoporösen Materialien wie MCM-5 oder in Zeolithen wie LTL, ZSM-5.

Auch farbstoffdotierte Polymer Partikel, wie beispielsweise Partikel, Latices oder Wachse aus Polyethylen, Polypropylen, Polytetrafluorethylen, Polyamiden, Polyester, Polyurethane, Acrylnitrile, Polymethacrylate wie beispielsweise Methylmethacrylate, Polyacrylate, Polystyrole, Polyvinylchlorid, Polyethylenterephthalat, Copolymere aus Ethylen und Acrylsäure und Paraffinwachse (wie beispielsweise Polysperse, erhältlich bei Lawter Int., Belgien). Es können auch Gemische dieser Verbindungen oder Polymere wie beispielsweise Polystyrol und Acrylate, Ethylen-Acrylat-Copolymere, Copolymere aus Styrol und Acrylnitril verwendet werden. Die Partikelgrösse der Latices kann zwischen 20 nm und 5'000 nm liegen, bevorzugt sind Grössen zwischen 40 nm und 1000 nm und besonders bevorzugt zwischen 50 nm und 500 nm. Auch Polymere wie PMMA, PMA, PS oder Partikel, wie sie in Patent WO 2003/064557 beschrieben sind kommen dafür in Frage.

Beispiele anderer für die Erfindung interessanter Konversionsfarbstoffe sind lumineszierende Polymere, welche mit anderen Polymeren gemischt werden können: z.B. fluoreszierende organische Halbleiterpolymere (z. B. MEH-PPV, CN-PPV, L-PPV , Superyellow) oder Polymere mit fixierten fluoreszierenden organischen Farbstoffen oder metallorganischen Komplexen.

Alle oben beschreiben Konversionsfarbstoffe können einzeln oder in geeigneten Kombinationen verwendet werden.

**Erste mögliche Art der Konversionsschicht:**

In einer ersten möglichen Art eine Konversionsschicht herzustellen wird der Konversionsfarbstoff in ein filmbildendes Polymer eingearbeitet. Beispiele dafür geeigneter Polymere sind beispielsweise synthetische, natürliche oder modifizierte natürliche wasserlösliche Polymere wie beispielsweise vollständig oder teilweise hydrolysierter Polyvinylalkohol oder Copolymere aus Vinylacetat und anderen Monomeren; modifizierte Polyvinylalkohole; (Meth)acryliertes Polybutadien; Homopolymere oder Copolymere von (Meth)acrylamid; Polyvinylpyrroildone, Polyvinylacetale, Polyurethane sowie Stärke oder modifizierte Stärke, Cellulose oder modifizierte Cellulose wie Hydroxyethylcellulose, Carboxymethylcellulose und Gelatine oder deren Gemische.

Bevorzugte synthetische Polymere sind modifizierter Polyvinylalkohol, Polyurethan, (Meth)acryliertes Polybutadien, Copolymere von (Meth)acrylamid sowie Polyacrylnitrile oder ihre Gemische.

Auch diese Schicht kann, wie vorher für die mikro- und mesoporöse Schicht mit dem tiefen Brechungsindex beschrieben worden ist, geeignete Zusätze, wie beispielsweise Weichmacher oder oberflächenaktive Substanzen enthalten und vernetzt oder gehärtet werden.

**Zweite mögliche Art der Konversionsschicht:**

Da die erfindungsgemässen mikro- und mesoporösen Schichten ein hohes und von aussen zugängliches vernetztes Porenvolumen aufweisen, kann eine Konversionsschicht auch erreicht werden, indem man die Poren einer solchen Schicht mit Lösungen von Konversionsfarbstoffen in Lösungsmittel hohen Dampfdrucks oder in zu Polymeren vernetzbaren Monomeren füllt. Dies kann flächig erfolgen oder sogar die Möglichkeit eröffnen nebeneinander in derselben Schicht Zonen mit unterschiedlichen Konversionsfarbstoffe anzuordnen. Auf diese Weise können beispielsweise Muster (z. B. unterschiedliche Farbpixel) mittels bekannter Druckmethoden, wie beispielsweise Ink-Jet, Offset-druck oder Siebdruck erzeugt werden.

**Dritte mögliche Art der Konversionsschicht:**

Eine andere Art solche Konversionsschichten herzustellen ist die Verwendung von Öl in Wasser Emulsionen mit einem geeigneten Binderpolymer, welches filmbildend ist und vernetzt werden kann. Der Konversionsfarbstoff wird dabei in der Ölphase gelöst oder dispergiert. Dadurch lassen sich auch Konversionsfarbstoffe verwenden, welche alleine in wäsriger Lösung nicht gelöst oder dispergiert werden können. Die Herstellung solcher Emulsionen und daraus abgeleiteten Schichten ist aus der photographischen Industrie zur Herstellung von Farbfilmen gut bekannt und werden beispielsweise im Buch von Pierre Glafkidès « Chimie et Physique photographiques, Tome2, 5. Edition, Editions de l'usine nouvelle, Paris » und anderen Standardwerken der Photographie beschrieben.

**Vierte mögliche Art der Konversionsschicht:**

Eine weitere Art solche Konversionsschichten herzustellen ist wasserdispergierbare thermoplastische farbstoffdotierte Polymerpartikel mit einem Bindemittel zu verwenden. Das Bindemittel kann beispielsweise ein oben schon beschriebenes wasserlösliches Polymer sein, welches gehärtet werden kann. Eine solche Konversionsschicht kann nachträglich beispielsweise mittels Heissprägen geformt werden, um die Partikel zu verschmelzen. Dabei wird der Polymerfilm, falls notwendig, in einem zusätzlichen Schritt nach dem Auftrag der Schicht durch eine Wärmebehandlung unter Druck erzeugt. Diese nachträgliche Wärmebehandlung unter Druck ist beispielsweise dann nicht notwendig, wenn die Schicht während der Trocknungsphase die Glasübergangstemperatur des thermoplastischen Polymers während einer gewissen Zeit erreicht oder überschreitet.
Eine nachträgliche Wärmebehandlung unter Druck kann auch dazu verwendet werden, um zusätzlich eine gewünschte Struktur aufzubringen, wie beispielsweise Mikrolinse, Fresnellinsen, Pyramiden oder andere geometrische Formen.
Die wasserdispergierbaren thermoplastischen Polymere umfassen beispielsweise Partikel, Latices oder Wachse aus Polyethylen, Polypropylen, Polytetrafluorethylen, Polyamiden, Polyester, Polyurethane, Acrylnitrile, Polymethacrylate wie beispielsweise Methylmethacrylate, Polyacrylate, Polystyrole, Polyvinylchlorid, Polyethylenterephthalat, Copolymere aus Ethylen und Acrylsäure und Paraffinwachse (wie beispielsweise Polysperse, erhältlich bei Lawter Int., Belgien). Es können auch Gemische dieser Verbindungen oder Polymere wie beispielsweise Polystyrol und Acrylate, Ethylen-Acrylat-Copolymere, Copolymere aus Styrol und Acrylnitril verwendet werden. Die Partikelgrösse der Latices kann zwischen 20 nm und 5'000 nm liegen, bevorzugt sind Grössen zwischen 40 nm und 1000 nm und besonders bevorzugt zwischen 50 nm und 500 nm. Die Glasübergangstemperatur liegt zwischen 30° C und 170° C, bevorzugt zwischen 50° C und 110° C, besonders bevorzugt zwischen 60° C und 90 °C.
Falls die Schicht mit den Polymerpartikeln nicht bereits während des Herstellungsprozesses einen transparenten Film bildet, können die Polymerpartikel zu einem Film verschmolzen werden, mit den dem Fachmann bekannten Einrichtungen und Bedingungen, wie sie bei der Laminierung von Foto- und Tintenstrahldruckpapier üblich sind. Beispielsweise kann das Laminiergerät GBC 3500 Pro, erhältlich bei GBC European Films Group, Mercuriusstraat 9, Kerkrade, Holland, verwendet werden. Dieses Gerät ist für eine Wärmebehandlung bei einer Temperatur von 120° C bei einer Durchlaufgeschwindigkeit von etwa 27 cm/Min besonders geeignet.
Die wasserdispergierbaren thermoplastischen Polymere können auch aus mehreren Schalen aufgebaut sein, wobei beispielsweise der Kern und eine äussere Schale eine unterschiedliche Quellbarkeit oder eine unterschiedliche Glasübergangstemperatur aufweisen können.
Die Polymerpartikel oder Polymerlatices können eine ungeladene Oberfläche oder eine positive oder eine negative Oberflächenladung aufweisen.
Die Polymerpartikel können mit wasserlöslichen Bindemitteln gemischt werden, wie zum Beispiel den vorher erwähnten Bindemitteln, vorzugsweise mit Polyvinylalkohol oder Mischungen verschiedener Polyvinylalkohole. Bevorzugt sind Polyvinylalkohole mit einer Viskosität von mindestens 26 mPasec und einem Hydrolysegrad von mindestens 70 %.
In einer anderen Ausführungsart der Erfindung können auch mit UV-Strahlen härtbare Polymerpartikel verwendet werden, welche in Wasser dispergiert und aufgetragen werden. Anschliessend wird die nichtporöse Polymerschicht in einem zusätzlichen Schritt durch eine Wärmebehandlung unter Druck und/oder eine UV-Belichtung erzeugt, wie es von M. M. G. Antonisse, P. H. Binda und S. Udding-Louwrier in "Application of UV-curable powder coatings on paperlike substrates", American Ink Maker 79(5), 22 - 26 (2001) beschrieben wird.

**Konversionsschichten mit Streuzentren:**

In einer anderen Ausführungsart der Erfindung können die Konversionsschichten zusätzlich noch Verbindungen enthalten, welche als Streuzentren wirken. Dazu werden beispielsweise anorganische Verbindungen verwendet, welche im interessierenden Wellenlängenbereich (zwischen 200 nm und 2000 nm, bevorzugt zwischen 200 nm und 700 nm) einen höheren Brechungsindex besitzen als die für die Herstellung der Konversionsschicht verwendeten Materialien. Im Gegensatz zu den mikro- und mesoporösen Schichten mit tiefem Brechungsindex, welche anorganische Verbindungen enthalten, wird der Anteil der anorganischen Verbindungen im Verhältnis zum verwendeten Polymer in der Konversionsschicht so tief gehalten, dass keine Porosität entstehen kann. Als "nichtporös" wird dabei eine Schicht definiert, in welcher das Verhältnis des Porenvolumens zum Gesamtvolumen weniger als 4 % beträgt.

Beispiele solcher bevorzugten Streupartikel in der Konversionsschicht sind PbS, TiO2, SiO2, Al2O3, AlOOH, ZrO2, ZnO, SnO2 oder das Mischoxid Indium-Zinn-Oxid.

Die Grösse und die Menge der verwendeten Partikel oder der Agglomerate wird so gewählt, dass der gewünschte Effekt erzielt werden kann. In einer bevorzugten Ausführungsart der Erfindung liegt der mittlere Partikeldurchmesser dieser anorganischen Nanopartikel (Primärpartikel) vorzugsweise zwischen 200 nm und 10000 nm, besonders bevorzugt ist der Grössenbereich zwischen 400 nm und 3000 nm.

Bei der Zugabe solcher Partikel können gegenenfalls Zusätze verwendet werden, wie beispielsweise Oberflächenmodifikatoren, welche die Verträglichkeit der Partikel mit der Konversionsschicht gewährleisten.

In einer anderen bevorzugten Ausführungsart der Erfindung sind die Streuzentren Verbindungen mit einem tieferen Brechungsindex als die verwendeten Polymere der Konversionsschicht. Z.B. Luftblasen, Mikrohohlkugeln oder Aerogel-Partikel, wie beispielsweise jene unter dem Produktnamen Nanogel® von Cabot Corporation, Tuscola, USA erhältlichen Partikel.

In einer anderen bevorzugten Ausführungsart der Erfindung wird der Konversionsfarbstoff in eine mikro- und mesoporöse Schicht eingebaut, welche zusätzlich stark brechende Streuzentren enthält. Durch das maximale Brechungsindesverhältnis zwischen Streupartikel und Luft wird die Streueffizienz erhöht. In dieser Ausführungsart wirkt die Konversionsschicht ebenfalls gleichzeitig als Extraktionsschicht.

**Mikro- und mesoporöse Zwischenschicht mit Streuzentren:**

Die mikro- und mesoporöse Zwischenschicht besteht aus einem dreidimensionalen Netzwerk zweier sich durchdringender Phasen, einer festen und einer gasförmigen. Das Netzwerk weist dabei Strukturen mit Dimensionen im Submikrometerbereich auf. Die Streuung in der mikro- und mesoporösen Zwischenschicht kann nun über die gezielte Kontrolle der Morphologie der Porenstruktur beeinflusst werden. Beispielsweise durch Zugabe von grösseren Partikeln, Agglomeraten oder Partikel mit anderen Morphologien (z. B. stäbchenförmig oder plattenförmig) desselben Materials, welche die homogene Porengrössenverteilung stören und dadurch als Streuzentren wirken.

Die Streuung kann aber auch durch gezielte Einführen von zusätzlichen Streupartikeln mit einem höheren Brechungsindex erzeugt werden. Beispielsweise kann dies durch Zugabe von TiO2, SiO2, Al2O3, AlOOH, ZnO, ZrO2, PbS, SnO2 oder das Mischoxid Indium-Zinn-Oxid erfolgen. Die Grösse und die Menge der verwendeten Partikel oder der Agglomerate wird so gewählt, dass der gewünschte Effekt erzielt werden kann. Bevorzugt werden jedoch Grössen zwischen 200 nm und 10000 nm, besonders bevorzugt zwischen 400 nm und 3000 nm. Bei der Zugabe solcher Partikel können gegenenfalls Zusätze verwendet werden, wie beispielsweise Oberflächenmodifikatoren, welche die Verträglichkeit der Partikel mit der mikro- und mesoporösen Schicht gewährleisten.

**Schichtherstellung:**

Die erfindungsgemässen Schichten werden im allgemeinen als wässrige Giesslösung, die alle nötigen Komponenten enthalten, auf den flexiblen Träger aufgebracht oder vergossen. In vielen Fällen werden Netzmittel als Begusshilfsmittel zugesetzt, um das Giessverhalten und die Gleichmässigkeit der Schichten zu verbessern. Obwohl solche oberflächenaktiven Verbindungen in der Erfindung nicht beansprucht werden, bilden sie trotzdem einen wesentlichen Bestandteil der Erfindung.

Zur Verhinderung der Brüchigkeit der mikro- und mesoporösen Schichten mit tiefem Brechungsindex, welche anorganische Nanopartikel enthalten, können zusätzlich noch Weichmacher wie beispielsweise Glyzerin zugesetzt werden.

Die erfindungsgemässen Materialien enthalten mindestens ein Schichtpaket, welches eine mikro- und mesoporöse Schicht mit tiefem Brechungsindex und eine Konversionsschicht enthält, oder aber mehrere solcher Schichtpakete, wobei die Reihenfolge der Schichten, die Orientierung der Schichten, die genaue Zusammensetzung der Schichten und ihre Dicke von der jeweiligen Anwendung abhängen. Im Fall mehrerer Schichtpakete können diese nacheinander oder auch gemeinsam auf den flexiblen Träger aufgebracht werden.

In einer ersten Ausführungsart der Erfindung wird zur Herstellung eines solchen flexiblen Materials für optische Anwendungen zuerst die mikro- und mesoporöse Schicht mit dem tiefen Brechungsindex, welche anorganische Nanopartikel und ein Bindemittel und gegebenenfalls weitere Zusätze enthält, auf den flexiblen Träger aufgebracht. Dazu werden wässrige, kolloidale Dispersionen dieser anorganischen Nanopartikel, zusammen mit dem Bindemittel und den gegebenenfalls weiteren Zusätzen, bei Temperaturen zwischen 0° C und 100° C, bevorzugt zwischen 15° C und 60° C auf flexible Träger aufgebracht und der begossene flexible Träger wird anschliessend getrocknet. In einem zweiten Schritt wird dann die Konversionsschicht darauf aufgetragen, indem im allgemeinen wässrige Giesslösung, die alle nötigen Komponenten enthalten, bei Temperaturen zwischen 0° C und 100° C, bevorzugt zwischen 15° C und 60° C aufgetragen werden und der begossene flexible Träger anschliessend getrocknet wird.

In einer anderen Ausführungsart der Erfindung können weitere Schichtpakete nach einer der oben beschriebenen Methoden auf den schon mit einem Schichtpaket beschichteten flexiblen Träger aufgebracht werden.

In einer bevorzugten Ausführungsart der Erfindung werden alle Schichten gleichzeitig aufgebracht.

In einer bevorzugten Ausführungsart der Erfindung werden zwei Schichtpakete auf den flexiblen Träger aufgebracht, wobei die Schichtreihenfolge folgendermassen aussehen kann: Flexibler Träger, eine mikro- und mesoporöse Schicht mit tiefem Brechungsindex, eine erste Konversionsschicht, dann eine zweite Konversionsschicht mit einem anderen Konversionsfarbstoff und darauf nochmals eine zweite mikro- und mesoporöse Schicht mit tiefem Brechungsindex.

In einer weiteren Ausführungsart der Erfindung werden die Schichtpakete, welche je eine mikro- und mesoporöse Schicht mit tiefem Brechungsindex, welche anorganische Nanopartikel enthält, und eine Konversionsschicht enthalten, gleichzeitig in einem Schritt auf flexible Träger aufgebracht. Anschliessend wird der auf diese Art begossene flexible Träger getrocknet.

Die Trocknung kann beispielsweise mit Luft, mit IR-Strahlen, mit Mikrowellenstrahlen, durch Kontakttrocknung (die Trocknungsenergie wird durch reine Wärmeleitung im Kontakt mit der Oberfläche eines geheizten Materials in das zu trocknende Gut eingebracht) oder eine Kombination dieser Methoden erfolgen.

Die Trocknung erfolgt bevorzugt mit einem Gasgemisch, vorzugsweise Luft, wobei die Schichttemperatur während der Trocknung 100° C, vorzugsweise 60° C nicht übersteigt.

Die Giesslösungen können auf verschiedene Arten auf den flexiblen Träger aufgebracht werden. Die Giessverfahren schliessen verschiedenste allgemein bekannte Giessverfahren ein wie beispielsweise das Gravurstreichen, das Walzenstreichen, das Stabstreichen, den Schlitzguss, den Extrusionsguss, den Rakelguss, den Kaskadenguss, den Vorhangguss oder andere übliche Giessverfahren. Wenn der flexible Träger auf einer festen Unterlage fixiert wird, können auch der Tauchguss oder der Schleuderguss verwendet werden.

Die Giessgeschwindigkeit hängt vom verwendeten Verfahren ab und kann innerhalb weiter Grenzen verändert werden. Bevorzugt als Giessverfahren für die erfindungsgemässen Materialien wird der Vorhangguss bei Geschwindigkeiten zwischen 30 m/Min und 2000 m/Min, bevorzugt zwischen 50 m/Min und 500 m/Min.

Alle oben erwähnten Schichtpakete können gegebenenfalls in einer oder mehreren der Schichten weitere Zusätze, wie beispielsweise andere lumineszierende oder lichtabsorbierende Verbindungen, enthalten.

Im folgenden werden weitere bevorzugte Ausführungarten der Erfindung angesprochen:

Die Konversionsschicht 3 kann mehr als einen Konversionsfarbstoff in derselben Schicht enthalten.

Die Konversionsschicht 3 kann midestens zwei Konversionsfarbstoffe enthalten, welche einen Energietransfer machen können.

Die Konversionsschicht 3 kann aus mehreren Schichten 3a/3b (s. Figur 6 a) bestehen. Alle Konversionsschichten und Zwischenschichten können dabei unterschiedliche Dicken und Zusammensetzungen haben im Rahmen der beschriebenen Eigenschaften solcher Schichten.

Es können sich zwischen den unterschiedlichen Konversionsschichten 3a und 3b je eine tiefbrechende mikro- und mesoporöse Zwischenschicht 2 befinden (s. Figur 6 b). Alle Konversionsschichten und Zwischenschichten können dabei unterschiedliche Dicken und Zusammensetzungen haben im Rahmen der beschriebenen Eigenschaften solcher Schichten.

Es können sich auf der ersten Konversionsschicht 3a eine zweite Konversionsschicht 3b, darauf eine zweite Zwischenschicht 2b und eine dritte Konversionsschicht 3c befinden (s. Figur 6 c). Alle Konversionsschichten und Zwischenschichten können dabei unterschiedliche Dicken und Zusammensetzungen haben im Rahmen der beschriebenen Eigenschaften solcher Schichten.

In einer anderen bevorzugten Ausführungsart der Erfindung befinden sich auf der ersten Konversionsschicht 3a eine zweite Zwischenschicht 2b, darauf eine zweite Konversionsschicht 3b und darauf eine dritte Konversionsschicht 3c (s. Figur 6 d). Alle Konversionsschichten und Zwischenschichten können dabei unterschiedliche Dicken und Zusammensetzungen haben im Rahmen der beschriebenen Eigenschaften solcher Schichten.

Es können sich auch auf der ersten Konversionsschicht 3a eine zweite Zwischenschicht 2b, darauf eine zweite Konversionsschicht 3b, darauf eine dritte Zwischenschicht 2c und darauf eine dritte Konversionsschicht 3c (s. Figur 6 e). Alle Konversionsschichten und Zwischenschichten können dabei unterschiedliche Dicken und Zusammensetzungen haben im Rahmen der beschriebenen Eigenschaften solcher Schichten.

Alle oben erwähnten Schichtpakete können gegebenenfalls in einer oder mehreren der Schichten weitere Zusätze, wie beispielsweise andere lumineszierende oder lichtabsorbierende Verbindungen, enthalten.

Ferner kann auf der anderen Seite des transparenten Trägers zusätzlich eine Antireflexionsschicht aufgebracht werden.

### Mikro- und mesoporöse Antireflexschicht:

Als Antireflexionsschicht kann eine mikro- und mesoporöse Schicht auf den Träger aufgebracht werden, welche ähnlich aufgebaut ist wie die oben beschriebene mikro- und mesoporöse Zwischenschicht. Die optimale Beschaffenheit einer solchen Antireflexionschicht bezüglich Brechungsindex und Schichtdicke kann beispielsweise im Patent EP1022587 nachgelesen werden.

### Mikro- und mesoporöse Lichtextraktionsschichten:

Es kann auch auf die äusserste Konversionsschicht eine zusätzliche Schicht aufgebracht werden, welche die Lichtextraktion begünstigt. Als Lichtextraktionsschicht kann eine mikro- und mesoporöse Schicht verwendet werden, welche ähnlich aufgebaut sind, wie die oben beschriebene mikro- und mesoporöse Zwischenschicht. Der Brechungsindex der Schichten kann dabei durch die Wahl der anorganischen Partikel angepasst werden. Es ist auch möglich den Brechungsindex durch die Porosität der Schicht zu steuern. Dies kann durch die Variation der Menge an verwendetem Bindemittel erreicht werden. Der Brechungsindex der Schicht liegt zwischen dem mittleren Brechungsindex der Konversionsschicht und jenem der Umgebung. Bevorzugt wird ein Brechungsindex bei 550 nm zwischen 1.1 und 1.5. Es ist auch möglich eine Abfolge von mikro- und mesoporösen Schichten zu verwenden, die einen Brechungsindexgradienten aufweisen, welcher einen graduellen Übergang zwischen dem Brechungsindex der Konversionsschicht und der Umgebung gewährleistet. Die Funktionsweise ähnlicher Lichtextraktionsschichten wird beispielsweise in den Patenten US20070241355 oder US2006/0278883 beschrieben.

### Konversionsschichten mit Oberflächenstruktur:

Auf die oberste Konversionsschicht kann gegebenenfalls eine Struktur aufgebracht werden, welche die Lichtextraktion und die Lichtverteilung beeinflussen kann. Eine solche Struktur kann mit Hilfe des Tintenstrahldruck, der Photolithographie, des Offsetdrucks, der Beschriftung mit Lasern oder durch eine Heissprägung erzeugt werden. Falls die Konversionsschicht teilweise aus thermoplastischen Polymeren besteht, können solche Strukturen direkt in die oberste Konversionsschicht geprägt werden. Verschiedene Arten solcher Strukturen und deren Eigenschaften werden beispielsweise in folgenden Patenten beschrieben: PCT Anmeldung WO 2007/011154 oder PCT Anmeldung WO 01/41225.

Es ist auch möglich eine geeignete Schicht separat herzustellen und auf die Konversionsschicht zu laminieren.

Es können gegebenenfalls auch zwischen den Schichten und dem Träger oder auf den Schichten eine oder mehrere zusätzliche Schichten mit anderen Funktionen (beispielsweise lumineszierende Schichten, elektrisch leitfähige Schichten, reflektierende Schichten, Schutzschichten, Schichten zur mechanischen Stabilisierung oder Ablöseschichten) aufgebracht werden.

Auf dem Träger kann sich eine Ablöseschicht befinden, welche es erlaubt das auf den Träger aufgebrachte Schichtpaket auf einen anderen Träger zu übertragen: Folie, Glas... In diesem Fall kann es sinnvoll sein die Schichten in umgekehrter Reihenfolge anzuordnen, so dass auf dem neuen Träger wieder die erfindungsgemässen Schichtabfolgen vorhanden sind.

Auf der Rückseite des Trägers kann eine Schicht aufgebracht werden, welche ein späteres Laminieren oder Kleben der Konversionsfolie auf andere Träger erlaubt.

Hiermit kann die Konversionsfolie auf der Seite der Konversionsschicht auf ein anderes Material laminiert werden.

Die vorliegende Erfindung wird nun an Hand von Beispielen näher beschrieben, ohne dass sie dadurch in irgendeiner Weise eingeschränkt würde.

## Beispiele

Im folgenden werden sieben Beispiele der Zusammensetzung und Herstellung von Schichten der erfindungsgemässen optischen Elemente im Detail beschrieben, deren Messergebnisse in den Figuren 7-19 dargestellt, (wobei die Bezeichnungen W,T,R und A die in der Beschreibung der Figur 1 definierten Bedeutungen haben) und weiter unten im Abschnitt « Ergebnisse » diskutiert.

### Beispiel 1: TiO2 Partikel als Streuzentren in Konversionsschicht

Konversionsschichten mit dem Farbstoff PDB (Perylendicarbonsäure-diisobutyl ester) und Ti02 Streuzentren in der Konversionschicht mit der Zusammensetzung von Tabelle 1 wurden wiefolgt hergestellt :

Zuerst wurden Oelemulsionen hergestellt, welche die notwendige Menge an PDB (erhältlich bei ABCR GmbH & Co. KG aus Karlsruhe in Deutschland) enthalten haben. Der Konversiosfarbstoff wurde dazu in einer Mischung von Trikresylphosphat (TKP) Öl (erhältlich unter dem Produktnamen DISFLAMOLL TKP bei Lanxess Deutschland GmbH, 51369 Leverkusen, Deutschland) und Ethylacetat gelöst und bei 60°C unter starkem Rühren zu einer wässrigen Gelatinelösung (aus GELITA Gelatine, erhältlich bei Gelita Ag, 69402 Eberbach, Deutschlad), welche Natrium-diisopropylnaphthalensulfonat (erhältlich als Naxan DIL bei Nease Corporation, 45030 Harisson, Ohaio, USA) enthielt, zudosiert. Ethylacetat wurde anschliessend unter reduziertem Druck abdestilliert. Die Oeltröpfchen wurden durch Ultraschallbehandlung auf eine typische Grösse von 1 $\mu$m reduziert.

Parallell wurden die unterschiedlichen TiO2 Dispersionen hergestellt. Kronos AV (erhältlich bei Kronos International Inc., 51373 Leverkusen, Deutschland) wurde unter sehr hohen Scherraten in demineralisiertem Wasser dispergiert.

Für die Herstellung der Giesslösungen wurden Ölemulsion und TiO2 Dispersion gemischt und mit demineralisiertem Wasser verdünnt. Die Giesslösungen mit der in Tabelle 1 aufgeführten Zusammensetzung (im getrockneten Zustand) wurden mit einem geeigneten Meyer-Stabgiesser auf einen substrierten transparenten Polyesterträger Cronar® 742 (erhältlich bei DuPont Teijin Films, Luxemburg) aufgebracht bei 40°C getrocknet.

Tabelle 1

| Beispiel | Gelatine [g/m2] | TKP [g/m2] | Konversionsfarbstoff PDB[g/m2] | TiO2 [g/m2] |
|---|---|---|---|---|
| 1-A | 8.9 | 5.0 | 0 | 0.0 |
| 1-B | 8.9 | 5.0 | 0 | 0.1 |
| 1-C | 8.9 | 5.0 | 0 | 0.3 |
| 1-D | 8.9 | 5.0 | 0 | 1 |
| 1-E | 8.9 | 5.0 | 0.05 | 0.0 |
| 1-F | 8.9 | 5.0 | 0.05 | 0.1 |
| 1-G | 8.9 | 5.0 | 0.05 | 0.3 |
| 1-H | 8.9 | 5.0 | 0.05 | 1 |

### Beispiel 2: SiO2 Partikel als Streuzentren in Konversionsschicht

Konversionsschichten mit dem Farbstoff PDB und Si02 Streuzentren in der Konversionsschicht wurden analog zum Beispiel 1 hergestellt, mit einer Zusammensetzung (in getrocknetem Zustand), welche in Tabelle 2 zusammengefasst ist. Für die Herstellung der SiO2 Dispersion wurde Sylord C803 von Grace Davison GbmH & CO KG, Reinach, Schweiz, verwendet.

Tabelle 2

| Beispiel | Gelatine [g/m2] | TKP [g/m2] | Konversionsfarbstoff PDB [g/m2] | SiO2 [g/m2] |
|---|---|---|---|---|
| 2-A | 8.9 | 5.0 | 0 | 0.0 |
| 2-B | 8.9 | 5.0 | 0 | 1 |
| 2-C | 8.9 | 5.0 | 0 | 2.5 |
| 2-D | 8.9 | 5.0 | 0 | 5 |

(fortgesetzt)

| Beispiel | Gelatine [g/m2] | TKP [g/m2] | Konversionsfarbstoff PDB [g/m2] | SiO2 [g/m2] |
|----------|-----------------|------------|--------------------------------|-------------|
| 2-E | 8.9 | 5.0 | 0.05 | 0.0 |
| 2-F | 8.9 | 5.0 | 0.05 | 1 |
| 2-G | 8.9 | 5.0 | 0.05 | 2.5 |
| 2-H | 8.9 | 5.0 | 0.05 | 5 |

### Beispiel 3: Mikro- und mesoporöse Schicht als optische Zwischenschicht zwischen Konversionsschicht und transparentem Träger

Eine mikro- und mesoporöse Schicht mit einem tiefen Brechungsindex und der in Tabelle 3-1 aufgeführten Zusammensetzung (im getrockneten Zustand) wurde auf einen substrierten transparenten Polyesterträger Cronar® 742 aufgebracht.

Tabelle 3-1

| Bestandteil | Menge (g/m2) | | | |
|-------------|------|------|--------|--------|
| | 3A | 3B | 3C | 3D |
| AP-3 Aluminiumoxid/hydroxid | 0.0 | 7.200 | 15.000 | 28.000 |
| Milchsäure | 0.0 | 0.210 | 0.438 | 0.818 |
| Mowiol 2688 | 0.0 | 0.264 | 0.550 | 1.027 |
| Mowiol 5698 | 0.0 | 0.528 | 1.100 | 2.053 |
| Härter | 0.0 | 0.162 | 0.338 | 0.630 |

AP-3 ist als Cataloid AP-3 bei Catalyt & Chemicals Ind.Co Ltd., Japan erhältlich. Mowiol 2688 und Mowiol 5698 sind bei Clariant AG, Muttenz, Schweiz erhältlich. Der Härter ist Borsäure, erhältlich bei Schweizerhalle Chemie AG, Basel, Schweiz.

Auf die Schichten 3A, 3B, 3C und 3D wurden dann Polymerschichten der in Tabelle 3-2 aufgeführten Zusammensetzung (im getrockneten Zustand) aufgebracht.

Tabelle 3-2

| Bestandteil | Menge (g/m2) |
|-------------|--------------|
| Methyl hydroxypropylcellulose (MHPC) | 4.175 |
| Coumarin 334 | 0.013 |

Methyl hydroxypropylcellulose ist als Culminal MHPC-50 erhältlich bei Hercules International GmbH Schaffhausen, Schweiz. Coumarine 334, Acros Organics, ist bei Fisher Scientific Wohlen, Schweiz, erhältlich.

Die Zusammensetzung der daraus resultierenden Beispiele ist in Tabelle 3-3 ersichtlich.

Tabelle 3-3

| Beispiel | mikro- und mesoporöse Schicht [g/m2] | MHPC Schicht [g/m2] |
|----------|--------------------------------------|---------------------|
| 3-A | 0 | 4.188 |
| 3-B | 8.364 | 4.188 |
| 3-C | 17.426 | 4.188 |
| 3-D | 32.528 | 4.188 |

*Beispiel 4: Streuung in mikro- und mesoporöser Zwischenschicht*

Im Beispiel 4-A wurde die Konversionsschicht (PDB : 0.05 g/m2 ; TKP : 5 g/m2 ; Gelatine : 8.9 g/m2) auf den transparenten Polyesterträger Cronar ® 742 gegossen.

Im Beispiel 4-B wurde dieselbe Konversionsschicht auf eine mikro- und mesoporöse Schicht (Cab-o-sil M-5 : 19 g/m2 ; Mowiol 4088 : 3.8 g/m2) gegossen, welche zuvor auf den trasparenten Polyesterträger Cronar® 742 aufgebracht wurde.

Im Beispiel 4-C wurde dieselbe Konversionsschicht auf eine mikro- und mesoporöse, starkt lichtstreuende Schicht (Cab-o-sil M-5 : 10.5 g/m2 ; Mowiol 5698 : 4 g/m2 ; Kronos AV : 2 g/m2) gegossen, welche zuvor auf den transparenten Polyesterträger aufgebracht wurde.

Mowiol 4088 und 5698 sind bei Clariant AG, Muttenz, Schweiz erhältlich. Cab-o-sil M-5 bei Cabot GmbH, Rheinfelden, Deutschland.

Tabelle 4

| Beispiel | Schichtabfolge |
|---|---|
| 4-A | PET / Konversionsschicht |
| 4-B | PET / mikro- und mesoporöse Zwischenschicht /Konversionsschicht |
| 4-C | PET / mikro- und mesoporöse Zwischenschicht mit TiO2 Streuzentren / Konversionsschicht |

*Beispiel 5: Kombination von mikro- und mesoporöser Zwischenschicht und Streuzentern in Konversionsschicht*

Die Konversionsschicht (PDB: 0.04 g/m2; TKP: 8 g/m2; Gelatine; 8 g/m2) mit unterschiedlichem Niveau an Streuzentren wurden gemäss Tabelle 5 sowohl direkt auf den transparenten Polyesterträger Cronar® 742 als auch auf eine zuvor auf denselben Träger aufgebrachte mikro- und mesoporöse Schicht (Cab-o-sil M-5: 2 g/m2; Mowiol 4088: 0.6 g/m2) gegossen. Alle Schichten wurden schliesslich mit einer dünnern Schutzschicht (Gelatine: 2 g/m2) versehen.

Tabelle 5

| Beispiel | mikro- und mesoporöse Zwischenschicht [g/m2] | Ti02-Anteil in Konversionsschicht [g/m2] |
|---|---|---|
| 5-A | 0 | 0.0 |
| 5-B | 0 | 0.2 |
| 5-C | 0 | 0.4 |
| 5-D | 2.6 | 0.0 |
| 5-E | 2.6 | 0.2 |
| 5-F | 2.6 | 0.4 |

*Beispiel 6: Lichtextraktion durch Oberflächenrauhigkeit*

Eine Polymerschicht mit 5 $\mu$m Dicke und der in Tabelle 6-1 aufgeführten Zusammensetzung (im getrockneten Zustand) wurde auf den substrierten transparenten Polyesterträger Cronar® 742 aufgebracht.

Tabelle 6-1

| Bestandteil | Menge (g/m$^2$) |
|---|---|
| Methyl hydroxypropylcellulose (MHPC) | 3.71 |
| Farbpigment | 0.51 |

Das Farbpigment bestand aus Zeolith LTL Kristallen (Länge 70 nm), bei welchen 15% des internen zugänglichen Porenvolumens mit dem Farbstoff PDB beladen war. Eine Methode zur Beladung der Zeolithkristalle mit neutralen Farbstoffen kann nachgelesen werden unter: M. Pauchard, A. Devaux, G. Calzaferri, Chem. Eur. J., 6 (18), S. 3456-3470 (2000). Zeolith LTL ist bei NanoScape AG, Planegg-Martinried, Deutschland, erhältlich.

In Beispiel 6-B wurde auf diese Schicht zusätzlich eine Polymerschicht bestehend aus 4.02 g/m2 MHPC aufgetragen:

Die Zusammensetzung der daraus resultierenden Beispiele ist in Tabelle 6-2 ersichtlich.

Tabelle 6-2

| Beispiel | MHPC mit Zeolith-Pigment [g/m2] | MHPC-Überschicht [g/m2] |
|---|---|---|
| 6-A | 4.22 | 0 |
| 6-B | 4.22 | 4.02 |

***Beispiel 7: Kombination von mikro- und mesoporöser Zwischenschicht und Streuzentern in Konversionsschicht***

Konversionsschichten mit der in Tabelle 7 aufgeführten Zusamensetzung (im getrockneten Zustand) wurden direkt auf einen substrierten transparenten Polyesterträger Cronar@ 742 aufgebracht.

Tabelle 7

| Beispiel | Mowiol 5698 [g/m2] | Coumarin 334 [g/m2] | TiO2 [g/m2] |
|---|---|---|---|
| 7-A | 10.6 | 0.014 | 0.0 |
| 7-B | 10.6 | 0.014 | 0.1 |

### Prüfungen

Figur 3 zeigt die Messanordnung, welche verwendet wurde um die totale Transmission und totale Reflexion der Konversionsfolien zu messen. Die Unterscheidung zwischen diffusen und gerichteten Anteilen kann gemacht werden, wenn bei einer Messung vermieden wird, dass die gerichteten Anteile auf den Detektor treffen.

Mit Hilfe von Referenzproben, derselben Zusammensetzung jedoch ohne Konversionsfarbstoff, können dann die Wellenleitung und die Absorption berechnet werden. Dazu wird angenommen, dass die Absorption in der Referenzprobe null ist und dass die Wellenleitung in Probe und Referenzprobe gleich sind.

Figur 4 zeigt die Anordnung, mit welcher die Fluoreszenzeigenschaften gemessen wurden.

Als Anregungslichtquelle wurde entweder eine blaue LED oder Laserlicht mit der Wellenlänge 450 nm verwendet.

### Ergebnisse

Eine Möglichkeit die räumliche Verteilung des abgestrahlten Lichts zu beinflussen und die Konversionseffizienz zu erhöhen, ist die gezielte Einführung von Streuzentren. Streuung vermindert den Anteil an gerichteter Transmission und erhöht die Anteile diffuser Transmission und Reflexion. Figur 7 zeigt die Aufteilung des Lichts (einer blausen LED Lichtquelle mit $\lambda$=450 nm) durch eine Probe ohne (Beispiel 7-A) und eine Probe mit eingeführter Diffusion (Beispiel 7-B) in der Konversionsschicht.

In Figur 7 sieht man, dass durch die Einführung der Diffusion die totale Transmission nur gerade um ca. 5 % ab und die totale Reflexion nur um ca. 5% zunimmt. Der Anteil an diffuser Transmission nimmt jedoch um ca. 19% zu gegenüber der gerichteten Transmission zu. Die gerichtete Reflexion verändert sich praktisch nicht, da sie durch die Reflexion an der Oberfläche des Träger dominiert wird. Die gezielte Einführung von Streuzentren erlaubt es daher den Anteil an diffuser Transmission bevorzugt und gezielt zu erhöhen.

Die Streuung des Lichts führt auch dazu, dass der optische Weg in der Konversionsfolie verlängert wird, was wiederum die Absorption erhöhen kann.

Figuren 8 und 9 zeigen sehr schön auf, wie durch gezielte Einführung von Streuzentren in die Konversionsschicht diese Balance beeinflusst werden kann:

Die Figuren 8 und 9 zeigen das Verhalten der totalen Transmission ($T_g(\lambda)+T_d(\lambda)$), der totalen Reflexion ($R_g(\lambda)$ + $R_d(\lambda)$), der Absorption $A(\lambda)$ und der Wellenleitung $W(\lambda)$ mit TiO2 Streuzentren (Beispiele 1-A bis 1-D), respektive SiO2 Streuzentren (Beispiele 2-A bis 2-D) in einer Referenz-Folie, welche keinen Konversionsfarbstoff enthält (deshalb ist die Absorption gleich null) bei einer Wellenlänge von 450 nm. Man sieht sehr gut, wie mit steigender Konzentration der Streuzentren die Transmission abnimmt und die Reflexion zunimmt. Auch die Wellenleitung nimmt etwas zu, da die Streuzentren die Einkopplung des Anregungslicht in den Wellenleiter begünstigen. Der Effekt des TiO2 ist deutlicher, da der Brechungsindexunterschied zwischen den Partikeln und dem umgebenden Film grösser ist als beim SiO2.

Figuren 10 und 11 zeigen entsprechende Proben, welche jetzt jedoch einen Konversionsfarbstoff enthalten, welcher das einfallende blaue Licht absorbieren kann (Beispiele 1-E bis 1-H, resp. 2-E bis 2-H). Die Menge des Konversionsfarbstoffs ist in allen Proben identisch.

Man sieht sehr gut, dass die Absorption auf Kosten der Transmission und der Reflexion zunimmt. Man sieht auch, dass bei gleicher Menge an Konversionsfarbstoff im Film die Absorption durch eingeführte Streuzentren erhöht werden kann. Dieser Effekt läuft aber relativ schnell in Sättigung. Die Absorption kann im Falle der TiO2 Streuzentren deutlich stärker erhöht werden verglichen mit dem SiO2.

Die Figur 12 zeigt die Fluoreszenzemission des vom Konversionsfarbstoff nach vorne abgestrahlten Lichts ($E_v$) von denselben zwei Probenserien (Beispiele 1-E bis 1-H, resp. 2-E bis 2-H).

Man sieht, dass die gezielte Einführung von Streuzentren in beiden Fällen zu einer Erhöhung der abgestrahlten konvertierten Fluoreszenzintensität führt. Dies kann teilweise durch die erhöhte Absorption erklärt werden. Der Effekt läuft aber, wie zuvor die Absorption, relativ schnell in Sättigung. Die abgestrahlte Fluoreszenzintensität kann im Falle der Ti02 Streuzentren deutlich stärker und mit weniger Materialanteil erhöht werden verglichen mit dem SiO2.

Figur 13 zeigt das Verhalten der Fluoreszenzextraktionseffizienz derselben Probenserien, d.h. der nach vorne abgestrahlten Fluoreszenzintensität dividiert durch die Menge der absorbierten Strahlung.

Man sieht deutlich, dass die Fluoreszenzextraktionseffizienz mit zunehmender Streuung zunimmt und dann sättigt. Der Unterschied in der maximal erreichten Fluoreszenzextraktionseffizienz ist nicht sehr gross zwischen den zwei Serien.

Diese Beispiele zeigen, dass die gezielte Einführung von Streuzentren bis zu einem gewissen Mass die Konversionseffizienz, d. h. die Absorption und die Abstrahlung des Lichts nach vorne, verbessern kann.

Die Einführung von Partikeln kann zu zwei Arten von Streuzentren führen. Zum einen kann das Licht direkt an den Partikeln in der Schicht gestreut werden, falls ein Brechungsindex-Unterschied zwischen Partikeln und dem umgebenden Schichtmaterial besteht und die Partikel grösser sind als die Wellenlänge des zu streuenden Lichts. Zum Anderen kann die Einführung von Partikeln die Oberflächenrauhigkeit erhöhen, was zu einer erhöhten Lichtstreuung an der Oberfläche führt.

Die Figur 14 zeigt den Effekt der Oberflächenrauhigkeit auf die nach vorne abgestrahlte Fluoreszenz einer Probe (Beispiel 6-A und 6-B). Die Probe wurde so gewählt, dass die Partikel und das umgebende Schichtmaterial denselben Brechungsindex aufweisen, was die direkte Streuung an den Partikeln verhindert. Es bleibt also nur noch die erhöhte Oberflächenrauhigkeit, welche zur Erhöhung der nach vorne abgestrahlten Fluoreszenz beiträgt. In einer Referenzprobe wurde die Oberfläche mittels einer Polymerüberschicht geglättet, was in diesem Beispiel die nach vorne abgestrahlten Fluoreszenzintensität halbiert.

Figur 15 zeigt die mittels AFM gemessenen Rauhigkeitsprofile der zwei Proben. Dies zeigt, dass eine rauhe Oberfläche der Konversionsschicht die Fluoreszenzextraktion deutlich erhöhen kann.

Wenn man die Konversionsschicht genügend dünn macht, so dass sie keinen guten Wellenleiter mehr darstellt und die Konversionsschicht vom transparenten Träger optisch isoliert, und wenn zwischen der Konversionsschicht und dem Träger eine tiefbrechende Zwischenschicht verwendet wird, kann die Wellenleitung abgeschwächt und die Fluoreszenzabstrahlung senkrecht zur Folie erheblich erhöht werden.

Figur 16 zeigt die Probenserie 3-A bis 3-D, welche dieses Verhalten illustriert.

In diesem Fall besteht die Zwischenschicht aus einer mikro- und mesoporösen tiefbrechenden Schicht. Die Fluoreszenzabstrahlung nach vorne kann in der Serie 3-A bis 3-D um einen Faktor >2 erhöht werden. Dieser Effekt läuft aber in eine Sättigung. Die Grösse des Effekts hängt von der Schichtdicke und dem Brechungsindex der Zwischenschicht ab. Je tiefer der Brechungsindex und je dicker die Schicht, desto grösser wird der Effekt. Es tritt jedoch irgendwann eine Sättigung auf.

Eine andere Möglichkeit die räumliche Verteilung des abgestrahlten Lichts zu beeinflussen und die Konversionseffizienz zu erhöhen, besteht darin, Streuzentren in die tiefbrechende Zwischenschicht, welche die Konversionsschicht vom Träger optisch isoliert, einzuführen.

Figur 17 zeigt das Verhalten von einer Probenserie mit solchen Zwischenschichten (Beispiel 4-A bis 4-C).

Figur 17 bestätigt, dass eine tiefbrechende Zwischenschicht (4-B) die nach vorne abgestrahlte Fluoreszenz und die Fluoreszenzextraktionseffizienz verbessern kann, gegenüber einer Probe ohne diese Schicht (4-A) (siehe auch Resultate in Figur 16). Die Absorption bleibt dabei unverändert. Die Einführung von TiO2 Streuzentren in die Zwischenschicht (4-C) führt zu einer leichten Erhöhung der nach vorne abgestrahlten Fluorezenz des Konversionsfarbstoffs. Die Absorption nimmt in der Probe um ca 50% ab, da die externe Streuung vor der Konversionsschicht auch zu einer erhöhten Reflexion des Anregugnslichts führt. Die erhöhte Reflexion ist jedoch auch dafür verantwortlich, dass die Fluoreszenzextraktionseffizienz nahezu verdoppelt wird, da nun die Streuung in der Zwischenschicht einen Teil des nach rückwärts abgestrahlten konvertierten Lichts wieder nach vorne reflektiert. Figur 18 zeigt die gemessenen Fluoreszenzspektren der Proben 4-A bis 4-C.

Aus Figur 18 ist ersichtlich, dass die Einführung von Streuzentren in die Zwischenschicht den Anteil des Anregungslichts gegenüber dem konvertierten Licht selektiv vermindern kann, ohne die Fluorezenzintensität des konvertierten Lichts zu reduzieren. Dies wäre nicht möglich, wenn man die Intensität des Anregungslichts durch Einführung eines selektiven Absorptionsfilters vor der Konversionsschicht verringern würde. In diesem Fall würde nähmlich die konvertierte Fluorezenz im selben Masse abnehmen. Verringert man hingegen die Intensität des Anregungslichts durch Einführung von Streuzentren, wie im Beispiel 4-C, dann erhöht man gleichzeitig die Fluoreszenzextraktionseffizienz und kann die Verluste so kompensieren.

Eine weitere Möglichkeit die räumliche Verteilung des abgestrahlten Lichts zu beeinflussen und die Konversionseffizienz zu erhöhen besteht darin, die Konversionsschicht vom transparenten Träger optisch zu isolieren und direkt in die Konversionsschicht gezielt Streuzentren einzuführen.

Die Figur 19 zeigt, dass in einem erfindungsgemässen Material durch die Kombination der beiden Massnahmen die nach vorne abgestrahlte Fluoreszenz verbessert werden kann, verglichen mit der Situation wo nur mit Streuung oder einer Zwischenschicht gearbeitet wird. Man hat daher durch das gleichzeitige gezielte Einführen von Streuung und die Verwendung einer mikro- und mesoporösen Zwischenschicht die Möglichkeit, die Eigenschaften der Konversionsfolie zu optimieren und gleichzeitig die totale Konversionseffizienz zu erhöhen. Die Kombination der beiden Massnahmen erlaubt es daher auch in Fällen, wo es nachteilig oder schwierig ist, hohe Konzentrationen von Streuzentren direkt in die Konversionsschicht einzubauen, trotzdem eine hohe nach vorne abgestrahlte Fluoreszenzintensität zu erreichen.

**Patentansprüche**

1. Optisches Element mit einer transparenten Trägerschicht (1), und zumindest einer transparenten, optischen Konversionsschicht (3), welche Substanzen enthält, die Licht einer Wellenlänge absorbieren und Licht einer anderen Wellenlänge emittieren können, **dadurch gekennzeichnet, dass** das optische Element mindestens eine, zwischen der Trägerschicht (1) und der optischen Konversionsschicht (3) angeordnete Zwischenschicht (2) aufweist, und/oder dass Streuzentren (4) entweder in der optischen Konversionsschicht (3), und /oder in der Zwischenschicht (2) enthalten sind.

2. Optisches Element nach Anspruch 1, **dadurch gekennzeichnet, dass** die Zwischenschicht (2) mikro- und mesoporös ist.

3. Optisches Element nach Anspruch 1 oder 2, **dadurch gekennzeichnet, dass** die Tragerschicht (1), die Zwischenschicht (2) und die optische Konversionsschicht (3) flexibel sind und das optische Element die Form einer flexiblen Folie aufweist.

4. Optisches Element nach Anspruch 1, 2 oder 3, **dadurch gekennzeichnet, dass** es auf der Trägerschicht eine erste Zwischenschicht (2a), darauf eine erste Konversionsschicht (3a), darauf eine zweite Zwischenschicht (2b) und darauf einen zweite Konversionsschicht (3b) aufweist.

5. Optisches Element nach Anspruch 4, **dadurch gekennzeichnet, dass** es auf der zweiten Konversionsschicht (3b) eine drtite Zwischenschicht (2c) und darauf eine dritte Konversionsschicht (3c) aufweist.

6. Optisches Element nach Anspruch 1, 2 oder 3, **dadurch gekennzeichnet, dass** auf der Zwischenschicht (2) zwei aufeinanderliegende Konversionsschichten (3a, 3b) angeordnet sind.

7. Optisches Elelment nach Anspruch 1, 2 oder 3, **dadurch gekennzeichnet, dass** es eine erste und zweite Zwischenschicht (2a, 2b) aufweist, welche voneinander durch zwei aufeinanderliegenden Konversionsschichten ((3a', 3b') getrennt sind.

8. Optisches Element nach Anspruch 4, **dadurch gekennzeichnet, dass** auf der zweiten Konversionschicht (3b) eine dritte Konversionsschicht (3c) ohne dazwischenliegende Zwischenschicht angeordnet ist.

9. Optisches Element nach einem der vorhergehenden Ansprüche, insoweit als die Streuzentren in der(n) optischen Konversionsschicht(en) angeordnet sind **dadurch gekennzeichnet, dass** die Streuzentren aus Partikeln aus zumindest einem Kanditaten aus der Gruppe PbS, $TiO_2$, $SiO_2$, $Al_2O_3$, AlOOH, $ZrO_2$, ZnO, $SnO_2$, ein Mischoxyd aus Indium-Zinn Oxyd, Mikrohohlkugeln oder Aerogel-Partikel, jeweils mit einer mittleren Partikelgrösse zwischen 200 nm und 10,000 nm.

**10.** Optisches Element nach einem der vorhergehenden Ansprüche, insoweit als die Streuzentren in der(n) Zwischenschicht(en) angeordnet sind **dadurch gekennzeichnet, dass** die Streuzentren aus Partikeln des gleichen Materials bestehen wie die Zwischenschicht aber zu einer unterschiedlichen Porengrössenverteilung führen, oder aus Partikeln aus zumindest einem Kanditaten aus der Gruppe PbS, $TiO_2$, $SiO_2$, $Al_2O_3$, AIOOH, $ZrO_2$, ZnO, $SnO_2$, ein Mischoxyd aus Indium-Zinn Oxyd , Mikrohohlkugeln oder Aerogel-Partikel, jeweils mit einer mittleren Partikelgrösse zwischen 200 nm und 10,000 nm bestehen.

**11.** Optisches Element nach einem der vorhergehenden Ansprüchen, **dadurch gekennzeichnet, dass** es weitere Schichten, wie eine auf der Trägerschicht aufgebrachte Antireflexschicht, eine Kleberschicht, eine Kleberabdeckschicht oder eine Ablöseschicht umfasst.

**12.** Optisches Element nach einem der vorhergehenden Ansprüchen, **dadurch gekennzeichnet, dass** die Zwischenschicht(en) und/oder die Konversionsschicht(en) Konversionsfarbstoffe enthalten.

**13.** Optisches Element nach einem der vorhergehenden Ansprüche, **dadurch gekennzeichnet, dass** die oberste Konversionsschicht mit optischen Elementen wie Fresnellinsen, Microlinsen, Polymerkugeln, oder einer anderen Schicht versehen sein, welche zusätzlich die Lichtextraktion verbessern und die abgestrahlte Lichtverteilung beeinflussen.

**14.** Optisches Element nach einem der vorhergehenden Ansprüche, **dadurch gekennzeichnet, dass** es in einer oder mehreren Schichten weitere Zusätze with lumineszierende oder lichtabsorbierende Verbindungen aufweist.

**15.** Verfahren zur Herstellung eines optischen Elements nach einem der vorhergehenden Ansprüche, **gekennzeichnet durch** folgende Verfahrensschritte:

● Bereitstellen einer flexiblen transparenten Trägerschicht, Aufbringen auf die Trägerschicht einer wässrigen, kolloidalen Lösung des Zwischenschichtmaterials, welche alle nötigen Komponenten enthält, bei einer Temperatur zwischen 0 und 100°C, vorzugsweise zwischen 15 und 60°C, **durch** Begiessen ;
● Aufbringen einer im allgemeinen wässrigen Giesslösung, welche alle nötigen Komponenten der Konversionsschicht enthält, bei einer Temperatur zwischen 0 und 100°C, vorzugsweise zwischen 15 und 60°C, **durch** Begiessen ;
● Trocknen der so begossenen Trägerschicht nach jedem Begiessen zur Erzeugung einer Schicht, oder nach Ausführung mehrere oder aller Schichten, mit Luft, IR-Strahlen, Mikrowellen **durch** thermischen Kontakt oder einer Mischung davon.

Figur 1:

Figur 2

Figur 3 a

Figur 3b

$$S^R_{LED}(\lambda_{ex}) \qquad S^R_{REF}(\lambda_{ex}) \qquad S^R_{KF}(\lambda_{ex})$$

Figur 4

$$S_{LED}(\lambda_{ex}) \qquad S_{vor}(\lambda_{em}) \qquad S_{rück}(\lambda_{em})$$

Figur 5

Figur 6

(a)

(b)

(c)

(d)

(e)

Figur 7

Figur 8

Figur 9

Figur 10

Figur 11

Figur 12

Figur 13

Figur 14

Figur 15

Figur 16

Figur 17

Figur 18

Figur 19

Europäisches
Patentamt

European
Patent Office

Office européen
des brevets

**EUROPÄISCHER RECHERCHENBERICHT**

Nummer der Anmeldung

EP 08 16 4280

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 475 217 A (FUJI PHOTO FILM CO LTD [JP]) 10. November 2004 (2004-11-10) * Seiten 11-19 * | 1-15 | INV. H05B33/22 |
| X | EP 1 022 587 A (FUJI PHOTO FILM CO LTD [JP] FUJIFILM CORP [JP]) 26. Juli 2000 (2000-07-26) * Seiten 5-11 * * Seiten 16-17; Beispiele * | 1-15 | |
| X | JP 2001 250963 A (TDK CORP) 14. September 2001 (2001-09-14) * Absätze [0012] - [0019] * * Absätze [0030] - [0034] * * Absätze [0053], [0060] - [0064]; Beispiele * | 1-3, 9-11, 13-15 | |

RECHERCHIERTE SACHGEBIETE (IPC)

H05B

Der vorliegende Recherchenbericht wurde für alle Patentansprüche erstellt

| Recherchenort | Abschlußdatum der Recherche | Prüfer |
|---|---|---|
| München | 23. Januar 2009 | Doslik, Natasa |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

**ANHANG ZUM EUROPÄISCHEN RECHERCHENBERICHT**
**ÜBER DIE EUROPÄISCHE PATENTANMELDUNG NR.**

EP 08 16 4280

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-01-2009

| Im Recherchenbericht angeführtes Patentdokument | | Datum der Veröffentlichung | Mitglied(er) der Patentfamilie | | Datum der Veröffentlichung |
|---|---|---|---|---|---|
| EP 1475217 | A | 10-11-2004 | JP | 2004333936 A | 25-11-2004 |
| | | | KR | 20040095737 A | 15-11-2004 |
| | | | US | 2004223220 A1 | 11-11-2004 |
| EP 1022587 | A | 26-07-2000 | AU | 6523198 A | 30-10-1998 |
| | | | DE | 69837928 T2 | 21-02-2008 |
| | | | WO | 9845734 A1 | 15-10-1998 |
| | | | KR | 20060030848 A | 11-04-2006 |
| | | | US | 6210858 B1 | 03-04-2001 |
| JP 2001250963 | A | 14-09-2001 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006127030 A
- JP 11199781 B
- US 20070031685 A
- EP 1480278 A
- WO 2006114077 A
- EP 1422282 A
- WO 2005100016 A
- WO 2005051846 A
- EP 1492389 A
- US 4759990 A
- US 4583822 A
- WO 2007011154 A
- WO 0141225 A
- DE 10020346
- WO 0020221 A
- EP 0663620 A
- EP 1655348 A
- WO 2003064557 A
- EP 1022587 A
- US 20070241355 A
- US 20060278883 A

**In der Beschreibung aufgeführte Nicht-Patentliteratur**

- **M. Guillaumée's.** *Proc. of SPIE Nanophotonics II,* 2008, vol. 6988, 698811
- **S. Brunauer ; P. H. Emmet ; I. Teller.** Adsorption of Gases in Multimolecular Layers. *Journal of the American Chemical Society,* 1938, vol. 60, 309-319
- **C. Bärlocher ; W. M. Meier ; D. H. Olson.** Atlas of Zeolite Framework Types. Verlag Elsevier, 2001
- **M. M. G. Antonisse ; P. H. Binda ; S. Udding-Louwrier.** Application of UV-curable powder coatings on paperlike substrates. *American Ink Maker,* 2001, vol. 79 (5), 22-26
- **M. Pauchard ; A. Devaux ; G. Calzaferri.** *Chem. Eur. J.,* 2000, vol. 6 (18), 3456-3470